(19) **Europäisches Patentamt**
**European Patent Office**
**Office européen des brevets**

(11) **EP 2 335 442 B1**

(12) **EUROPÄISCHE PATENTSCHRIFT**

(45) Veröffentlichungstag und Bekanntmachung des Hinweises auf die Patenterteilung:
**12.08.2015 Patentblatt 2015/33**

(21) Anmeldenummer: **09748233.5**

(22) Anmeldetag: **15.10.2009**

(51) Int Cl.:
**G01S 5/02** (2010.01)

(86) Internationale Anmeldenummer:
**PCT/EP2009/007418**

(87) Internationale Veröffentlichungsnummer:
**WO 2010/046058 (29.04.2010 Gazette 2010/17)**

(54) **VORRICHTUNG UND VERFAHREN ZUM SCHÄTZEN EINER ORIENTIERUNG EINES MOBILEN ENDGERÄTS**

APPARATUS AND METHOD FOR ESTIMATING AN ORIENTATION OF A MOBILE TERMINAL

DISPOSITIF ET PROCÉDÉ D'ESTIMATION D'UNE ORIENTATION D'UN TERMINAL MOBILE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **24.10.2008 DE 102008053176**

(43) Veröffentlichungstag der Anmeldung:
**22.06.2011 Patentblatt 2011/25**

(73) Patentinhaber: **Fraunhofer-Gesellschaft zur Förderung der angewandten Forschung e.V.
80686 München (DE)**

(72) Erfinder:
• **MEYER, Steffen
91052 Erlangen (DE)**
• **HUPP, Jürgen
90425 Nürnberg (DE)**
• **HAIMERL, Stephan
92358 Seubersdorf (DE)**

(74) Vertreter: **Schenk, Markus
Schoppe, Zimmermann, Stöckeler
Zinkler, Schenk & Partner mbB
Patentanwälte
Radlkoferstrasse 2
81373 München (DE)**

(56) Entgegenhaltungen:
**EP-A1- 1 542 492    US-A1- 2005 040 968
US-B1- 6 839 560**

• BAHL P ET AL: "RADAR: an in-building RF-based user location and tracking system" INFOCOM 2000. NINETEENTH ANNUAL JOINT CONFERENCE OF THE IEEE COMPUTER AND COMMUNICATIONS SOCIETIES. PROCEEDINGS. IEEE TEL AVIV, ISRAEL 26-30 MARCH 2000, PISCATAWAY, NJ, USA,IEEE, US, Bd. 2, 26. März 2000 (2000-03-26), Seiten 775-784, XP010376167 ISBN: 978-0-7803-5880-5

**Beschreibung**

Die vorliegende Erfindung bezieht sich auf Vorrichtungen und Verfahren zum Schätzen von räumlichen Orientierungen mobiler Endgeräte, wie sie insbesondere zum Lokalisieren oder Navigieren der mobilen Endgeräte in einem drahtlosen Kommunikationsnetz eingesetzt werden können.

Für eine Lokalisation von mobilen Endgeräten stehen verschiedene Ortungstechnologien zur Verfügung. Das wohl bekannteste System zur Lokalisierung bzw. Navigation im Outdoorbereich ist das satellitengestützte Global Positioning System (GPS). Für die Lokalisierung bzw. Navigation innerhalb von Gebäuden bzw. in einem Indoorbereich sind verschiedene Ansätze bekannt, wie beispielsweise Infrarotsysteme, RFID-Systeme oder auch Feldstärkeauswertungen von IEEE 802.11 WLAN-Netzwerken (WLAN = Wireless Local Area Network). Das GPS-System ist momentan nur für den Outdoorbereich zuverlässig verfügbar. Neuere Erweiterungen, wie hochsensible Empfänger oder das so genannte A-GPS (Assisted GPS) stellen Versuche dar, die Technologie auch innerhalb von Gebäuden nutzbar zu machen. A-GPS kombiniert dabei die Nutzung des satellitenbasierten GPS-Systems mit einem Empfang so genannter Assistenzinformationen aus zellularen Mobilfunknetzen. Zurzeit weisen diese Technologien aber noch nicht die gewünschten mittleren Genauigkeiten auf. Infrarotsysteme und RIFD-Systeme stehen im Allgemeinen nicht flächendeckend zur Verfügung und sind an spezifische Voraussetzungen gebunden.

Aufgrund der zunehmenden Verbreitung von drahtlosen Funknetzen, die beispielsweise auf dem WLAN-Standard basieren, bieten sich diese drahtlosen Netze als Basis für neue Lokalisierungsverfahren an.

Gängige, bisher verwendete Lokalisierungsverfahren basieren beispielsweise auf Triangulation, Nachbarschaftsbeziehungen, Lateration mittels Zeitmessung oder Lateration mittels Feldstärkeauswertung. Bei diesen Verfahren handelt es sich um Lokalisationsverfahren, bei denen entweder eine Position ortsfester Funksender bzw. Basisstationen bekannt sein muss, oder bei denen vorher an Referenzpositionen in einer von dem Lokalisationsverfahren abzudeckenden Umgebung trainiert werden muss.

Bei WLAN-basierten Ortungssystemen kommt als Basisverfahren oft ein so genanntes Received-Signal-Strength (RSS) Fingerprinting zum Einsatz. Dieses Verfahren basiert auf der Annahme, dass an einem aktuellen Ort empfangene bzw. empfangbare Signalstärken von Funksignalen mehrerer Funkstationen den aktuellen Ort bzw. die aktuelle Position eindeutig charakterisieren. Existiert eine Referenzdatenbasis, die für eine Anzahl von Referenzorten bzw. Referenzpositionen Senderkennungen von dort zu Referenzzeitpunkten empfangenen bzw. empfangbaren Funkstationen sowie die Signalstärken der entsprechenden Funksignale enthält, so kann aus einem Satz aktueller Messwerte (Senderkennungen und zugehörige Signalstärkenwerte) auf die aktuelle Position geschlossen werden, indem ein Abgleich zwischen aktuell gemessenen Messwerten und den Referenzwerten der Datenbasis erfolgt. Dieser Abgleich - auch Matching bezeichnet- bewertet für jeden Referenzpunkt, wie ähnlich dessen vorher aufgezeichnete Messwerte bzw. Referenzwerte zu den aktuellen Messwerten der aktuellen Position sind. Der oder die ähnlichsten Referenzpunkte bilden dann eine Basis für einen Schätzwert für den aktuellen Aufenthaltsort des mobilen Endgeräts.

Für eine Referenzdatenbasis wird durch eine Referenzmessung die Signalstärke von einem zu einem Referenzmesszeitpunkt an einer Referenzposition empfangbaren Funksender experimentell ermittelt. Dadurch entsteht eine Datenbasis, die zu jeder Referenzposition, an der eine Referenzmessung durchgeführt wurde, eine Liste von Funksendern (Access Points) mit der jeweilig zugeordneten Empfangsfeldstärke und - qualität enthält. Diese Liste kann auch als Referenzpaket bezeichnet werden. Bei einer WLAN-Implementierung kann eine solche Referenzdatenbasis beispielsweise die folgenden Parameter enthalten:

| RID | MAC | RSSI | PGS | X | Y | Z | MAPNR | CREATED |
|---|---|---|---|---|---|---|---|---|
| 1 | 00.0D.54.9E.17.81 | 46530 | 100 | 5795 | 15627 | 150 | 0 | 12.03.07 12:42 |
| 1 | 00.0D.54.9E.1A.BA | 67260 | 90 | 5795 | 15627 | 150 | 0 | 12.03.07 12:42 |
| 1 | 00.0D.54.9E.1D.64 | 72002 | 88 | 5795 | 15627 | 150 | 0 | 12.03.07 12:42 |
| 1 | 00.0E.6A.D3.B9.8B | 59531 | 100 | 5795 | 15627 | 150 | 0 | 12.03.07 12:42 |
| 1 | 00.0F.A3.10.07.6C | 46464 | 96 | 5795 | 15627 | 150 | 0 | 12.03.07 12:42 |
| 1 | 00.OF.A3.10.07.FB | 74488 | 94 | 5795 | 15627 | 150 | 0 | 12.03.07 12:42 |
| 1 | 00.0F.A3.10.09.SF | 72375 | 97 | 5795 | 15627 | 150 | 0 | 12.03.07 12:42 |
| 2 | 00.OD.54.9E.17.81 | 54138 | 100 | 14399 | 15451 | 150 | 0 | 12.03.07 12:43 |
| 2 | 00.0D.54.9E.18.1D | 76560 | 11 | 14399 | 15451 | 150 | 0 | 12.03.07 12:43 |
| 2 | 00.0D.54.9E.1A.BA | 62318 | 94 | 14399 | 15451 | 150 | 0 | 12.03.07 12:43 |

(fortgesetzt)

| RID | MAC | RSSI | PGS | X | Y | Z | MAPNR | CREATED |
|---|---|---|---|---|---|---|---|---|
| 2 | 00.0D.54.9E.1D.64 | 71348 | 96 | 14399 | 15451 | 150 | 0 | 12.03.07 12:43 |
| 2 | 00.0E.6A.D3.B9.8B | 45393 | 100 | 14399 | 15451 | 150 | 0 | 12.03.07 12:43 |
| 2 | 00.0F.A3.10.07.6C | 66853 | 96 | 14399 | 15451 | 150 | 0 | 12.03.07 12:43 |
| 2 | 00.0F.A3.10.07.FB | 72251 | 100 | 14399 | 15451 | 150 | 0 | 12.03.07 12:43 |
| 2 | 00.OF.A3.10.09.5F | 70990 | 90 | 14399 | 15451 | 150 | 0 | 12.03.07 12: 43 |
| 3 | 00.0D.54.9E.17.81 | 58291 | 100 | 24583 | 15627 | 150 | 0 | 12.03.07 12:43 |
| 3 | 00.0D.54.9E.18 | 78610 | 68 | 24583 | 15627 | 150 | 0 | 12.03.07 12:43 |
| 3 | 00.0D.54.9E.1A.BA | 62153 | 98 | 24583 | 15627 | 150 | 0 | 12.03.07 12:43 |
| 3 | 00.0D.54.9E.1D.64 | 64187 | 90 | 24583 | 15627 | 150 | 0 | 12.03.07 12:43 |
| 3 | 00.0E.6A.D3.B9.8B | 32851 | 100 | 24583 | 15627 | 150 | 0 | 12.03.07 12:43 |
| 3 | 00.0F.A3.10.07.6C | 69006 | 96 | 24583 | 15627 | 150 | 0 | 12.03.07 12:43 |
| 3 | 00.0F.A3.10.07.FB | 71749 | 92 | 24583 | 15527 | 150 | 0 | 12.03.07 12:43 |
| 3 | 00.0F.A3.10.09.5F | 71482 | 83 | 24583 | 15627 | 150 | 0 | 12.03.07 12:43 |
| 3 | 00.0F.A3.10.09.80 | 71000 | 40 | 24583 | 15627 | 150 | 0 | 12.03.07 12:43 |

Dabei enthält die Tabelle die folgenden Informationen:

- die Referenzposition-Identifikation (RID)

- die MAC-Adressen (MAC = Media Access Control) der empfangenen Stationen

- die Empfangsfeldstärken der Funksender (RSSI (Received Signal Strength Indicator); 46560 bedeutet -46,560 dBm)

- die Referenzposition in kartesischen, metrischen Koordinaten (x, y, z; 24583 bedeutet 245,83 m) sowie

- den Zeitpunkt der Messwertaufnahme.

Die Spalte PGS ("Percentage Seen") gibt an, wie häufig diese Station bei der Messwertaufnahme prozentual gesehen wurde (d. h. PGS = 90 bedeutet, dass im Schnitt die Station bei 9 von 10 Messungen gemessen wurde).

In der oben dargestellten Tabelle entsprechen sämtliche Informationen, die einer Referenzposition-Identifikation (RID) zugeordnet sind, einem Referenzmesspaket. D.h. die obige, exemplarische Tabelle umfasst drei Referenzmesspakete entsprechend drei verschiedenen geografischen Referenzpositionen.

Für die Lokalisierung werden aktuell empfangene Funksender mit ihrer jeweilig zugeordneten Empfangsfeldstärke (Messpaket) mit Referenzpaketen aus der Referenzdatenbasis in einer Abgleichphase verglichen. Eine in der Abgleichphase oftmals verwendete herkömmliche Distanzformel

$$acc = \sum_{n=1}^{Neq} \Delta RSSI_n \qquad\qquad (1)$$

geht davon aus, dass alle Funksender überall empfangbar sind. Dabei bedeutet acc das Übereinstimmungsmaß bzw. die Distanz zwischen aktuellem Messpaket und Referenzpaket und $N_{eq}$ eine Anzahl von Funksendern, von denen vorher aufgezeichnete Senderkennungen an der Referenzposition mit an der aktuellen Position gelieferten Senderkennungen identisch sind. Differenzen von RSSI-Werten von Funksendern, von denen vorher aufgezeichnete Senderkennungen an der Referenzposition mit an der aktuellen Position gelieferten Senderkennungen identisch sind werden als $\Delta RSSI_n$ (n=1,...,$N_{eq}$) bezeichnet. Dass alle Funksender überall empfangbar sind, ist jedoch nicht immer geweben. Enthält ein Referenzpaket Funksender A,B und C, ein aktuelles Messpaket die Funksender D,E, so ergibt sich als Distanz (ein optimaler) Wert 0. Anscheinend passt das Referenzpaket perfekt, obwohl kein einziger Funksender zwischen Referenz- und aktuellem Messpaket übereinstimmt.

Daher kann für die Praxis die Berechnung der Übereinstimmung bzw. der Distanz abgewandelt werden, dahingehend, dass in einem aktuellen Messpaket gegenüber einem Referenzmesspaket zuviel oder zuwenig empfangene Funksender die Distanz um einen Wert, der sich beispielsweise aus einer Malusfunktion ergibt, erhöhen.

$$acc = \frac{EQW \cdot \sum_{n=1}^{Neq} \Delta RSSI_n(\ ) + (1 - EQW) \cdot \left( \sum_{m=1}^{N_{nh}} M_{nh,m}(\ ) + \sum_{r=1}^{N_{HTM}} M_{htm,r}(\ ) \right)}{N_{eq} + N_{nh} + N_{htm}} \quad (2)$$

Dabei bedeutet EQW dabei ein Gewicht zwischen 0 und 1, das angibt, wie stark die Distanz der Messwerte bzw. die Distanz der Signalstärkewerte $\Sigma \Delta RSSI_n$ im Vergleich zu an der aktuellen Position gegenüber den zuviel ($N_{htm}$) oder zuwenig empfangenen Funksendern ($N_{nh}$) gewertet werden soll. Für jeden Funksender, der in den Referenzwerten fehlt, jedoch in den aktuell gemessenen Messwerten enthalten ist, kann ein Maluswert $M_{htm,r}()$ ($r=_1, ... , N_{htm}$) definiert werden. Ebenso kann für jeden Funksender, der in den Referenzwerten enthalten ist, jedoch in den aktuell gemessenen Messwerten fehlt, kann ein Maluswert $M_{nh,m}(\ )$ ($m=1,..., N_{nh}$) definiert werden.

Referenzpakte mit einer kleinen Distanz zu dem aktuellen Messpaket, d.h. vielen gemeinsamen Funksendern und wenig unterschiedlichen Empfangsfeldstärken, passen gut dem aktuellen Messpaket. Die zu den gut passenden Referenzpakten gehörigen Referenzpositionen sind sehr wahrscheinlich und gehen in eine Positionsberechnungsphase ein. Die Positionsberechnungsphase berechnet aus den Kandidatenpositionen die Position des mobilen Endgeräts. Das Ergebnis dieser Phase ist die Position des Endgeräts. Eine mögliche Realisierung ist die Berechnung eines gewichteten Mittelwerts aus den Kandidatenpositionen der Abgleichphase. Die inversen Distanzwerte bilden dabei die Gewichte in der Mittelung. Dieses k-weighted-nearest-Neighbour genannte Verfahren liefert durchaus respektable Ergebnisse, die mittleren Positionierungsfehler liegen bei wenigen Metern.

Hält ein Nutzer ein mobiles Endgerät, wie z.B. einen PDA (Personal Digital Assistent), vor seinem Körper, so werden Funksignale von Funksendern hinter dem Körper des Nutzers unter Umständen stark gedämpft. Befindet sich der Nutzer nun beispielsweise nahe einer Referenzposition, zu der ein Referenzpaket in einer Referenzdatenbasis existiert, wird das Referenzpaket aufgrund der Signaldämpfung durch den Körper unter Umständen als wenig passend verworfen, weil die abgeschatteten Funksender während des Einmessens beispielsweise nicht oder weniger abgeschattet waren und somit die Radiofingerabdrücke nicht gut übereinstimmen.

Ebenso kann es vorkommen, dass ein mobiles Endgerät, das zum Einmessen der Referenzpakte verwendet wurde, eine andere Antennenrichtcharakteristik aufweist, als ein mobiles Endgerät, das von einem Nutzer zum Lokalisieren bzw. Navigieren verwendet wird. Auch dadurch und zusätzlich zur Ausrichtung des mobilen Endgeräts zum Körper kann es dazu kommen, dass Referenzpakete von an sich gut passenden Referenzpositionen fälschlicherweise verworfen werden und somit eine Positionsschätzung leidet.

Zudem kann es für manche Anwendungen von Interesse sein, Informationen über die Ausrichtung des mobilen Endgeräts zum Körper bzw. die räumliche Orientierung des Nutzers und/oder Endgeräts zu erhalten.

Die EP 1 542 492 A1 offenbart ein mobiles Gerät und ein Verfahren zum Bestimmen der Position eines mobilen Geräts. Das mobile Gerät umfasst einen Bewegungsdetektor zum Erfassen einer Bewegung des mobilen Geräts, einen Speicher zum Speichern von Kalibrationsdaten, die eine Liste von Signalstärken von Drahtlos-Sendern und bekannten Positionen aufweisen. Ferner ist ein Positionserfassungsmodul zum Messen einer Signalstärke eines Drahtlos-Signals und zum Bestimmen der Position des mobilen Geräts bezüglich der Kalibrationsdaten vorgesehen. Außerdem ist ein Positionskorrekturmodul vorgesehen, um eine statistische Korrektur an den gemessenen Signalstärkedaten vorzunehmen, wenn der Bewegungsdetektor feststellt, dass sich das mobile Gerät weniger als einen Schwellwert bewegt. Ferner ist ein Orientierungsdetektor zur Detektion der Orientierung des mobilen Geräts vorhanden, wobei die Orientierung mit Orientierungsdaten, die in den Kalibrationsdaten gespeichert sind, verglichen werden kann.

Vor diesem Hintergrund besteht die Aufgabe der vorliegenden Erfindung darin, die Lokalisierung und/oder Navigation mittels RF-Fingerprintingverfahren (RF = Radio Frequency) aussagekräftiger und/oder zuverlässiger zu machen.

Diese Aufgabe wird durch eine Vorrichtung zum Schätzen einer aktuellen Orientierung eines mobilen Endgeräts mit den Merkmalen des Patentanspruchs 1, ein Verfahren nach Patentanspruch 14, einer Vorrichtung zum Speichern einer aktuellen Orientierung des mobilen Endgeräts gemäß Patent-anspruch 16 und ein Verfahren gemäß Patentanspruch 21 gelöst.

Ausführungsbeispiele der vorliegenden Erfindung schaffen Computer-Programme zur Durchführung der erfindungsgemäßen Verfahren.

Der vorliegenden Erfindung liegt die Erkenntnis zugrunde, dass eine Navigation basierend auf dem Finger-Printing-Verfahren verbessert werden kann, indem, ergänzend zur aktuellen Position, zusätzlich Orientierungsinformationen geschätzt werden, die einem Nutzer beispielsweise eine Information darüber geben können, in welche räumliche Richtung er sich bewegt. Dazu sind gemäß Ausführungsbeispielen der vorliegenden Erfindung jedem Referenzpaket Orientierungsinformationen zugeordnet. Die Orientierungsinformationen geben eine räumliche Orientierung eines mobilen Endgeräts an, mit welchem das entsprechende Referenzpaket aufgezeichnet wurde. Das heißt, es wird beispielsweise in dem Referenzpaket gespeichert, in welche Richtung das mobile Endgerät beim Einmessen des Referenzpunkts gehalten wurde. Dies ist vor allem dann interessant, wenn das mobile Endgerät, wie z.B. ein WLAN-fähiges Gerät, unmittelbar vor dem Körper eines Nutzers gehalten wird, so dass es durch den Körper zu Abschattungseffekten kommen kann. Selbst ohne diese besagten körperbedingten Abschattungseffekte kann eine zusätzliche Orientierungsinformation nützlich sein, da praktisch jede Antenne eine Richtcharakteristik aufweist. Daher kann unter Orientierung auch die räumliche Ausrichtung der Hauptkeule einer Antenne eines mobilen Endgeräts verstanden werden.

Die Orientierungsinformationen, beispielsweise hinsichtlich der vier Himmelsrichtungen Norden (N), Westen (W), Süden (S), Osten (O), können bei einer Navigation nicht nur zu Richtungsangaben verhelfen, sondern können eine Lokalisierung, d.h. eine Positionsbestimmung des mobilen Endgeräts auch zuverlässiger machen. Werden beispielsweise beim Einmessen zu jedem Referenzpunkt mehrere Referenzpakete für mehrere Orientierungen des Einmessgeräts aufgezeichnet (z.B. N, W, S, O), so werden die zu der Referenzposition gehörenden vier Referenzpakete entsprechend den vier Orientierungen aufgrund von körperbedingten und richtcharakteristikbedingten Signaldämpfungen unter Umständen sehr unterschiedlich ausfallen. Hält bei einer nachfolgenden Lokalisierung ein Nutzer sein mobiles Endgeräte beispielsweise zumindest näherungsweise in eine der Himmelsrichtungen, so können passende Referenzpakete zuverlässiger gefunden werden. Passende Referenzpakete wurden dann zumindest näherungsweise mit derselben räumlichen Orientierung aufgezeichnet, wie die aktuelle räumliche Orientierung des Nutzers bzw. seines mobilen Endgeräts.

Um Orientierungsinformationen in bzw. zusammen mit Referenzpaketen zu hinterlegen, so dass sich daraus Referenzorientierungen ergeben, umfassen Ausführungsbeispiele der vorliegenden Erfindung eine Vorrichtung zum Speichern einer aktuellen Orientierung eines mobilen Endgeräts an einer aktuellen geographischen Position, wobei an der aktuellen geographischen Position ein aktuelles Messpaket ermittelbar ist, welches eine Senderkennung und eine elektromagnetische Signaleigenschaft eines Funksenders aufweist, der an der aktuellen geographischen Position mit der aktuellen Orientierung des mobilen Endgeräts zu einem aktuellen Messzeitpunkt empfangbar ist. Die Vorrichtung zum Speichern weist eine Einrichtung zum Erfassen der aktuellen Orientierung des mobilen Endgeräts und eine Einrichtung zum Speichern der erfassten aktuellen Orientierung zusammen mit dem ermittelten Messpaket in einer Referenzdatenbasis auf.

Bei der Vorrichtung zum Speichern kann es sich beispielsweise um eine spezielle Einmessbox handeln, die zur Erzeugung von Referenzpaketen eingesetzt wird. Eine derartige Einmessbox kann eine mehr oder weniger komplizierte Einrichtung zum Erfassen der aktuellen Orientierung aufweisen. Möglich sind in diesem Fall beispielsweise Kompasse, GPS-Ortungsgeräte und/oder Inertialsensorik zur hochgenauen Positions- und Orientierungserfassung. Die Orientierung bzw. die Orientierungsinformation kann digital und quantiesiert gespeichert werden, so dass für Orientierung ein oder mehrere digitale Werte im Speicher der Datenbank abgelegt werden. Als mögliches Speicherformat bieten sich z.B. komplexe Zahlen an, aus denen Winkel bzw. Orientierungen abgelesen werden können. So könnte für Norden z.B. ein Zahlenpaar $(0,1)$ entsprechend der komplexen Zahl $0 + j$ ($j^2 = -1$), für Westen z.B. ein Zahlenpaar $(-1,0)$ entsprechend der komplexen Zahl $-1 + 0j$, für Süden z.B. ein Zahlenpaar $(0,-1)$ entsprechend der komplexen Zahl $0 - j$, und für Osten z.B. ein Zahlenpaar $(1,0)$ entsprechend der komplexen Zahl $1 + 0j$ gespeichert werden.

Gemäß anderen Ausführungsbeispielen kann die Orientierung aber auch von einem mobilen Endgerät bzw. Client erfasst bzw. geschätzt werden. Voraussetzung dafür sind allerdings bereits in der Referenzdatenbasis vorhandene Referenzorientierungen zu oder in Referenzpaketen. Dazu schaffen Ausführungsbeispiele der vorliegenden Erfindung eine Vorrichtung zum Schätzen einer aktuellen Orientierung eines mobilen Endgeräts an einer aktuellen geographischen Position, wobei an der aktuellen geographischen Position ein aktuelles Messpaket ermittelbar ist, welches eine Senderkennung und eine elektromagnetische Signaleigenschaft eines Funksenders aufweist, der an der aktuellen geographischen Position mit der aktuellen Orientierung des mobilen Endgeräts zu einem aktuellen Messzeitpunkt empfangbar ist. Die Vorrichtung zum Schätzen weist eine Einrichtung zum Ermitteln eines Übereinstimmungsmaßes (acc) zwischen dem aktuellen Messpaket und einem Referenzmesspaket auf, welches eine Senderkennung, eine Referenzorientierung und eine elektromagnetische Signaleigenschaft eines Referenzfunksenders aufweist, der an einer dem Referenzmesspaket zugeordneten geographischen Referenzposition mit der Referenzorientierung zu einem vor dem aktuellen Messzeitpunkt liegenden Referenzzeitpunkt empfangbar war. Ferner umfasst die Vorrichtung zum Schätzen eine Einrichtung zum Auswählen wenigstens eines Referenzmesspakets, welches eine Mindestübereinstimmung aufweist, und eine Einrichtung zum Bestimmen eines Schätzwerts für die aktuelle Orientierung des mobilen Endgeräts basierend auf der Referenzorientierung des zumindest einen ausgewählten Referenzmesspakets.

Gemäß einem bevorzugten Ausführungsbeispiel wird das wenigstens eine Referenzmesspaket derart ausgewählt, dass sein Übereinstimmungsmaß nicht um mehr als einen vorbestimmten Wert von einem ersten Bezugsübereinstimmungsmaß eines Bezugsreferenzmesspakets abweicht, welches eine höchste Übereinstimmung zu dem aktuellen Messpaket hat.

Gemäß einem Ausführungsbeispiel ist die Einrichtung zum Bestimmen eines Schätzwerts angepasst, um den Schätzwert basierend auf einer gewichteten Summe der den ausgewählten Referenzmesspaketen entsprechenden Referenzorientierungen zu bestimmen, wobei ein Gewicht einer Referenzorientierung von dem zu dem entsprechenden Referenzmesspaket ermittelten Übereinstimmungsmaß abhängt.

Bevorzugte Ausführungsbeispiele und Weiterbildungen sind Gegenstand der abhängigen Ansprüche.

Ausführungsbeispiele der vorliegenden Erfindung ermöglichen bei einer Navigation basierend auf RF-Fingerprinting eine Richtungsangabe, die angibt, in welcher Richtung sich ein Nutzer bewegt bzw. in welche Richtung ein Nutzer blickt. Aus derartigen Orientierungsinformationen können weitere Informationen abgeleitet werden, wie z.B. Richtungsanweisungen oder aber auch Informationen über Objekte im potentiellen Gesichtsfeld des Nutzers, wie z.B. Sehenswürdigkeiten.

Des Weiteren können Ausführungsbeispiele der vorliegenden Erfindung dazu dienen, eine Positionsbestimmung eines mobilen Endgeräts zuverlässiger zu gestalten, indem Referenzpakete zur Verfügung gestellt werden, die der aktuellen Orientierung eines mobilen Endgeräts bzw. Nutzers besser entsprechen und somit zu einer besseren Übereinstimmung in der Abgleich- bzw. Matchingphase führen können.

Bevorzugte Ausführungsbeispiele der vorliegenden Erfindung werden nachfolgend Bezug nehmend auf die beiliegenden Zeichnungen näher erläutert. Es zeigen:

Fig. 1      ein Ausführungsbeispiel einer dem Stand der Technik entsprechenden Vorrichtung zum Lokalisieren von Endgeräten;

Fig. 2      ein Beispiel einer Anwendung des Verfahrens zur Lokalisierung von mobilen Endgeräten;

Fig. 3a     eine schematische Darstellung eines Nutzers mit einem nach Norden ausgerichteten mobilen Endgerät;

Fig. 3b     eine schematische Darstellung eines mobilen Endgeräts, dessen Antenneneinrichtung eine Antennencharakteristik mit einer bestimmten Orientierung aufweist;

Fig. 4      ein schematisches Blockdiagramm einer Vorrichtung zum Speichern einer aktuellen Orientierung gemäß einem Ausführungsbeispiel der vorliegenden Erfindung;

Fig. 5      eine schematische Darstellung eines Referenzpakets, welches in einer Referenzdatenbasis gespeichert wird;

Fig. 6      eine schematische Darstellung einer Vorrichtung zum Schätzen einer aktuellen Orientierung eines mobilen Endgeräts gemäß einem Ausführungsbeispiel der vorliegenden Erfindung;

Fig. 7      ein Flussdiagramm eines Verfahrens zum Schätzen einer aktuellen Orientierung eines mobilen Endgeräts gemäß einem Ausführungsbeispiel der vorliegenden Erfindung;

Fig. 8      eine Darstellung einer Einrichtung zum Bestimmen eines Schätzwerts für die aktuelle Orientierung des mobilen Endgeräts gemäß einem Ausführungsbeispiel der vorliegenden Erfindung; und

Fig. 9      eine Darstellung eines Zahlenbeispiels zur Bestimmung eines Orientierungsschätzwertes; und

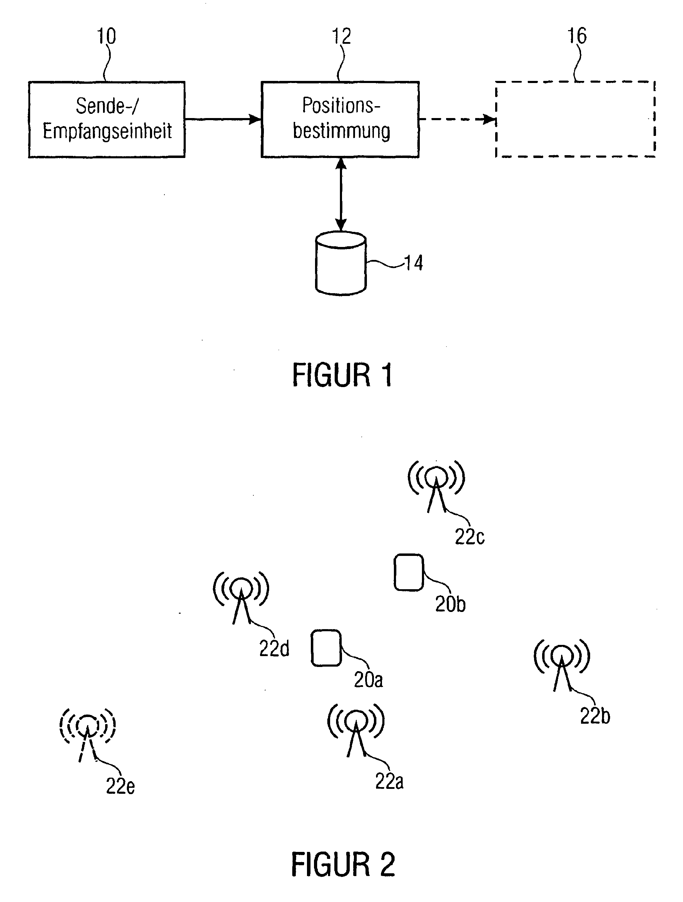

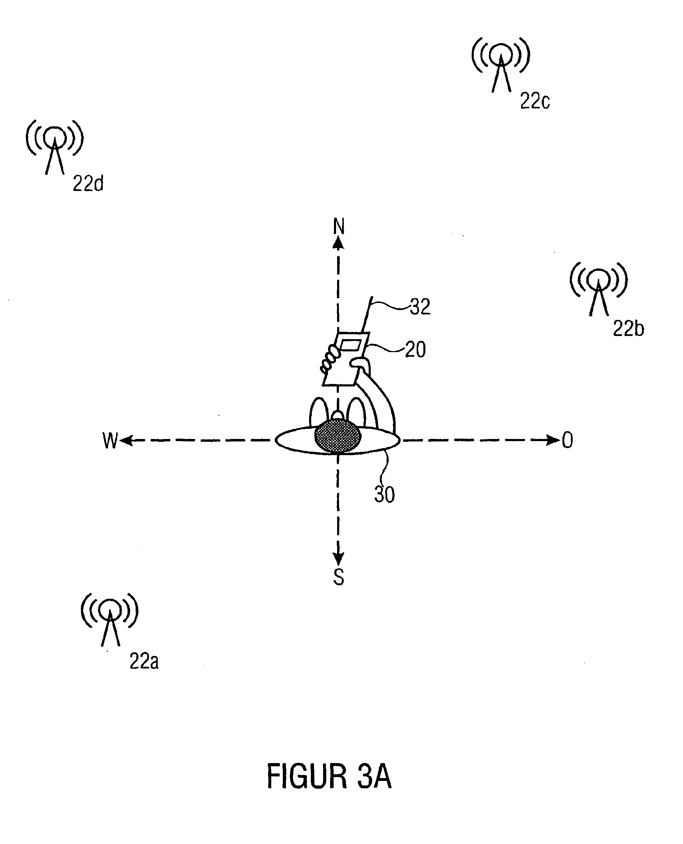

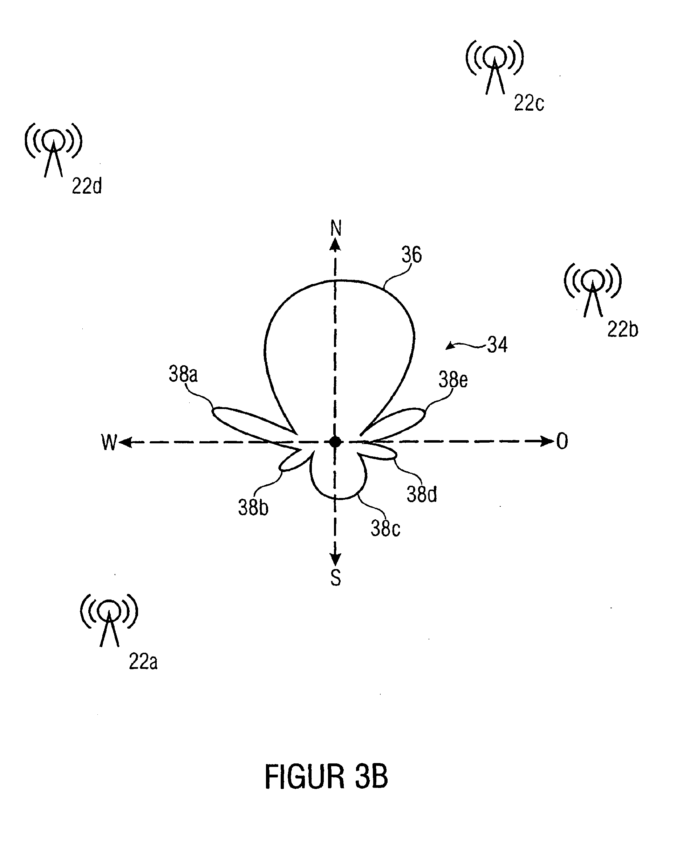

Anhand der Fig. 1 und 2 wird im Folgenden zunächst eine Lokalisierung gemäß dem Fingerprinting-Verfahren beschrieben, um das erfindungsgemäße Konzept, das anhand der Figuren 3 bis 9 näher erläutert wird, zu motivieren.

Dabei wird insbesondere der Tatsache Rechnung getragen, dass die wachsende Verbreitung von nicht-öffentlichen WLAN-Funksendern in vielen Städten inzwischen zu einer deutlichen Überabdeckung führt. Oftmals sind an einer einzigen Position 8 bis 12 Funksender bzw. Stationen (Access Points) empfangbar, wobei im innerstädtischen Bereich eine Anzahl empfangbarer Funkesender von 30 sogar überschritten werden kann (Spitzenwerte auf belebten Plätzen oder Gebieten hoher Wohn- oder Bevölkerungsdichte).

Für eine relativ sichere und genaue Lokalisierung reichen in der Regel bereits drei bis vier empfangbare Funksender aus.

Fig. 1 illustriert, wie die Lokalisierung eines mobilen Endgeräts mittels Fingerprinting (WLAN, GSM, BlueTooth, Wimax u.s.w.) im öffentlichen Bereich als Selbstlokalisierung jedes einzelnen mobilen Endgeräts realisierbar ist. Dabei ist eine Datenübertragung nicht notwendig, so dass prinzipiell auf eine Konnektivität des mobilen Endgeräts mit anderen Kommunikationspartnern verzichtet werden kann. Dies ist möglich, da das mobile Endgerät seine eigene Position berechnet, indem es aktuelle Signalcharakteristika seiner Umgebung misst und mit einer (lokalen) Referenzdatenbasis abgleicht.

Fig. 1 zeigt zur Illustration des Verfahrens beispielhaft eine schematische Darstellung eines mobilen Endgeräts, welches der Selbstlokalisierung fähig ist. Von einer Sende-/Empfangseinrichtung 10 werden Umgebungsinformationen, wie beispielsweise die Anzahl in Reichweite befindlicher Access Points und deren jeweilige Empfangsfeldstärke bestimmt. Diese Umgebungsinformationen werden an eine Positionsbestimmungseinrichtung 12 übertragen, welche ferner Zugriff auf Referenzumgebungsinformationen (Referenzmesspakete) hat, die in einer Referenzdatenbasis 14 gespeichert sein können.

Dabei kann die Referenzdatenbasis 14 sowohl lokal innerhalb des mobilen Endgeräts als auch nicht lokal auf einem externen Speicherplatz oder Gerät gespeichert sein. Im letzteren Fall muss das mobile Endgerät selbstverständlich Zugang auf die Referenzdaten haben, wofür zumindest eine Kommunikationsverbindung mit der Referenzdatenbasis 14 bestehen muss. Die Positionsbestimmungseinrichtung 12 verwendet einen Ortungsalgorithmus, um, basierend auf einem aktuellen Messpaket und den Referenzmesspaketen, die aktuelle Position des Endgeräts zu bestimmen. Dazu werden zunächst in einer Abgleichphase diejenigen Referenzmesspakete ermittelt, welche am besten mit dem aktuellen Messpaket übereinstimmen, d.h. deren Ähnlichkeit am größten ist. Danach wird in einer Positionsberechnungsphase basierend den ermittelten ähnlichen Referenzmesspaketen und deren geografischen Referenzpositionen die aktuelle geografische Position des Endgeräts bestimmt. Ist die aktuelle Position bestimmt, kann diese optional an ein Anwendungsmodul 16 übermittelt werden, um beispielsweise bei einem digitalen Stadtplan die Position anzuzeigen, bzw. um Services anzubieten, die in direkter Kausalbeziehung zur bestimmten Position stehen (so genannte Location Based Services).

Fig. 2 zeigt beispielhaft ein Anwendungsszenario mit zwei mobilen Endgeräten 20a und 20b und einer Mehrzahl von Kommunikationspartnern bzw. Basisstationen 22a bis 22e, die sich in einer Umgebung der mobilen Endgeräte 20a und 20b befinden. Als Umgebungsinformationen können die mobilen Endgeräte 20a und 20b beispielsweise die eindeutigen Identifikationsnummern der Funksender und die den jeweiligen Funksendern zugeordnete Empfangsfeldstärke bestimmen. Der Funksender 22e befindet sich in der größten Entfernung zu den mobilen Endgeräten 20a und 20b, so dass dieser zu manchen Zeitpunkten von den mobilen Endgeräten 20a und 20b empfangen werden kann und zu anderen Zeitpunkten nicht, was auch durch eine Abschattung der Basisstation 22e hervorgerufen werden kann. In einem solchen Fall kann der Funksender 22e in der eingangs beschriebenen Abgleichphäse beispielsweise trotzdem durch einen Maluswert beim Matching des aktuellen Messpakets mit Referenzmesspaketen berücksichtigt werden.

Nachdem in der Abgleichphase mittels Gl. (1) oder Gl. (2) Referenzpakete gefunden wurden, die gut zu dem aktuellen Messpaket passen, d.h. einen kleinen Distanzwert acc aufweisen, können die so gefundenen ähnlichen Referenzpakete bzw. deren zugeordnete Referenzpositionen der Positionsberechnungsphase zugeführt werden. Dabei kann als Schätzwert für die aktuelle Position des mobilen Endgeräts beispielsweise diejenige Referenzposition herangezogen werden, die zu dem am besten passenden Referenzpaket gehört, d.h. zu demjenigen Referenzpaket, welches den kleinsten Distanzwert acc aufweist. Ebenso denkbar ist eine gewichtete Mittelung der Koordinaten der infrage kommenden Referenzpositionen, derart, dass die jeweiligen Koordinaten der Referenzpositionen mit Gewichten umgekehrt proportional zu den ermittelten Distanzwerten gewichtet werden.

Zusätzlich oder alternativ zur Positionsermittlung kann gemäß Ausführungsbeispielen der vorliegenden Erfindung auch eine räumliche Orientierung des mobilen Endgeräts ermittelt werden. Eine räumliche Orientierung eines mobilen Endgeräts ergibt sich beispielsweise daraus, wie ein Nutzer ein mobiles Endgerät hält. Fig. 3a zeigt in Draufsicht einen Nutzer 30 mit einem mobilen Endgerät 20 inmitten einer Mehrzahl von Funksendern 22a bis 22d.

In dem in Fig. 3a beispielhaft gezeigten Szenario hält der Nutzer 30 das mobile Endgerät 20 zumindest näherungsweise in Richtung Norden. Dadurch dämpft der Nutzer 30 mit seinem Körper die von Funksender 22a herrührenden elektromagnetischen Strahlen, so dass an dem mobilen Endgerät 20 nur ein vergleichsweise geringer Signalanteil ankommt, was bezüglich des Funksenders 22a zu einem relativ geringen RSSI-Wert (RSSI = Received Signal Strength Indicator) führt. Die Funksender 22b bis 22d sind hingegen nicht oder kaum durch den Körper des Nutzers 30 abgeschattet, so dass diese mit der exemplarisch dargestellten räumlichen Orientierung des mobilen Endgeräts 20 relativ gut empfangbar sind.

Das mobile Endgerät 20 weist zum Senden und/oder Empfangen elektromagnetischer Strahlung eine Antenneneinrichtung 32 auf, die Teil der Sende-/Empfangseinrichtung 10 sein kann. Es ist bekannt, dass Antenneneinrichtungen eine Richtcharakteristik besitzen. Eine derartige Antennenrichtcharakteristik weist im Allgemeinen eine sogenannte Hauptkeule und diverse Nebenkeulen auf. Die Orientierung des mobilen Endgeräts 20 kann beispielsweise auch durch eine räumliche Ausrichtung der Antennenhauptkeule definiert werden, so wie es schematisch in Fig. 3b gezeigt ist.

Fig. 3b zeigt eine schematische Antennencharakteristik 34 mit einer Hauptkeule 36 und diversen Nebenkeulen 38a bis 38e. In dem gezeigten Szenario weist die Hauptkeule 36 näherungsweise Richtung Norden, was gleichbedeutend mit der Orientierung des mobilen Endgeräts sein kann.

Einem Fachmann wird bei Betrachtung der Fig. 3a und 3b klar, dass eine Berücksichtigung verschiedener Orientierungen bereits beim Einmessen von Referenzpaketen zu Verbesserungen bei einer nachfolgenden Positionsermittlung führen kann. Dazu müssen beim Einmessen bzw. Trainieren an Referenzpositionen Referenzmesspakete mit unterschiedlichen Orientierungen aufgezeichnet werden. Beispielsweise kann dazu die Orientierung eines mobilen Endgeräts an einer geographischen Referenzposition variiert werden, ohne die geographische Referenzposition selbst zu verändern. Das heißt, nach Aufzeichnung eines Messpakets an der Referenzposition mit einer nach Norden weisenden Referenzorientierung können noch weitere Referenzpakete an der Referenzposition mit in andere Himmelsrichtungen weisenden Referenzorientierungen aufgezeichnet werden. Sinnvoll sind beispielsweise mindestens zwei entgegengesetzte (180° Unterschied) Richtungen, oder drei, jeweils um 120°, unterschiedliche Richtungen. Wie oben bereits beschrieben wurde, sind die vier Basishimmelsrichtungen N, W, S, O natürlich ebenfalls denkbar.

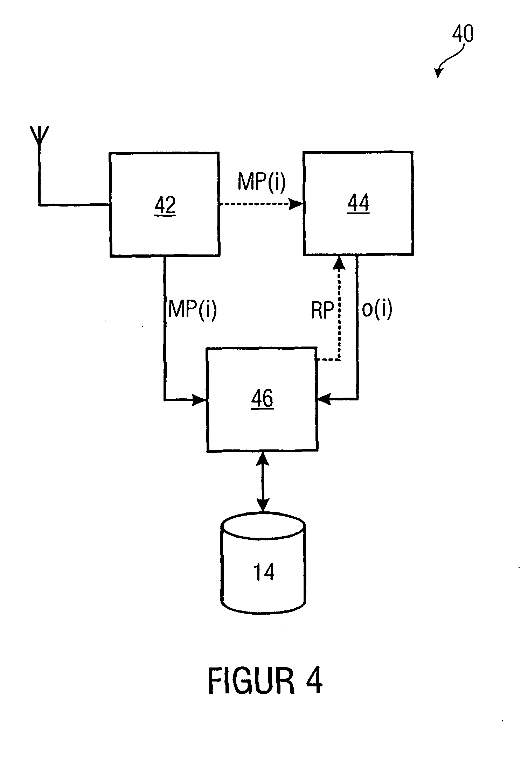

Dazu zeigt Fig. 4 schematisch eine Vorrichtung zum Speichern einer aktuellen räumlichen Orientierung bzw. Richtung eines mobilen Endgeräts an einer aktuellen geographischen Position, wobei an der aktuellen geographischen Position ein aktuelles Messpaket MP(i) ermittelbar ist, welches eine Senderkennung und eine elektromagnetische Signaleigenschaft (z.B. RSSI-Wert) eines Funksenders aufweist, der an der aktuellen geographischen Position mit der aktuellen Orientierung des mobilen Endgeräts zu einem aktuellen Messzeitpunkt i empfangbar ist.

Die Vorrichtung 40 weist dazu eine Einrichtung 42 zum Ermitteln des aktuellen Messpakets MP(i) auf. Ferner weist die Vorrichtung 40 eine Einrichtung 44 zum Erfassen der aktuellen Orientierung o(i) des mobilen Endgeräts auf. Eine Einrichtung 46 dient zum Speichern der erfassten aktuellen Orientierung o(i) zusammen mit dem ermittelten Messpaket MP(i) in einer Referenzdatenbasis 14.

Die Einrichtung 42 zum Ermitteln des Messpakets MP(i) umfasst die Sende/Empfangseinheit 10 des mobilen Endgeräts. Damit werden Senderkennungen, wie z.B. MAC-Adressen, und zugehörige Empfangsfeldstärkewerte ermittelt, die zum aktuellen Messpaket MP(i) zusammengefasst werden. Das aktuelle Messpaket MP(i) kann optional an die Einrichtung 44 zum Erfassen der aktuellen Orientierung übertragen werden. Dies ist dann der Fall, wenn in der Einrichtung 44 die aktuelle Orientierung o(i) basierend auf dem aktuellen Messpaket MP(i) und Referenzpaketen RP aus der Referenzdatenbasis 14 ermittelt wird. Darauf soll im Folgenden noch detaillierter eingegangen werden.

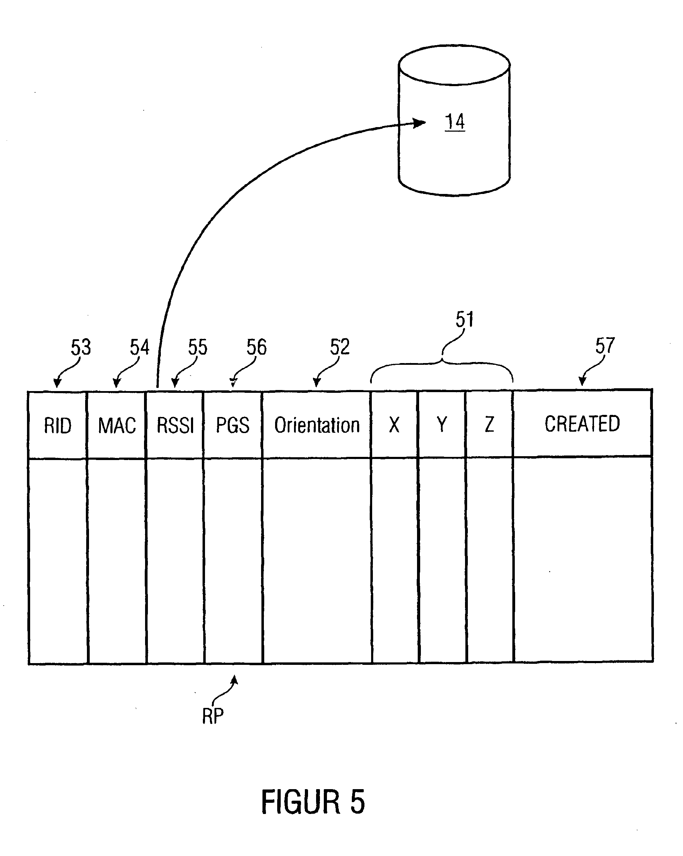

Gemäß anderen Ausführungsbeispielen kann es sich bei der Einrichtung 44 zum Erfassen der aktuellen Orientierung o(i) allerdings auch um z.B. einen herkömmlichen Kompass und/oder ein GPS-Ortungsgerät und/oder Inertialsensorik handeln, um die aktuelle räumliche Orientierung o(i) und eventuell die aktuelle geographische Position des mobilen Endgeräts zu bestimmen. Vorzugsweise wird zur Erzeugung eines neuen Referenzpakets das aktuelle Messpaket MP(i) zusammen mit der aktuellen Orientierung o(i) und der aktuellen Position des mobilen Endgeräts in der Referenzdatenbasis 14 gespeichert. Dies ist schematisch in Fig. 5 gezeigt.

Fig. 5 zeigt schematisch ein (neu erstelltes) Referenzpaket RP, welches in der Referenzdatenbasis 14 gespeichert wird. Dabei kann das neue Referenzpaket RP von der in Fig. 4 gezeigten erfindungsgemäßen Vorrichtung 40 erzeugt werden. Das Referenzpaket RP für eine bestimmte Referenzposition umfasst dabei zunächst die Koordinaten (x,y,z) der neuen Referenzposition. Des Weiteren umfasst das Referenzpaket RP Orientierungsinformationen 52, d.h. Informationen über die Orientierung des mobilen Endgeräts bei der Messwertaufnahme. Des Weiteren können eine Referenzpunktidentifikation 53, MAC-Adressen 54 von empfangenen Funksendern, entsprechende RSSI-Werte 55, PGS-Werte 56 und Messzeitpunkte 57 in dem Referenzpaket RP gespeichert werden, wie es eingangs bereits beschrieben wurde. Entscheidend ist hier, dass jedem Referenzpaket eine Orientierung 52 des mobilen Endgeräts bei der Messwertaufnahme zugeordnet wird.

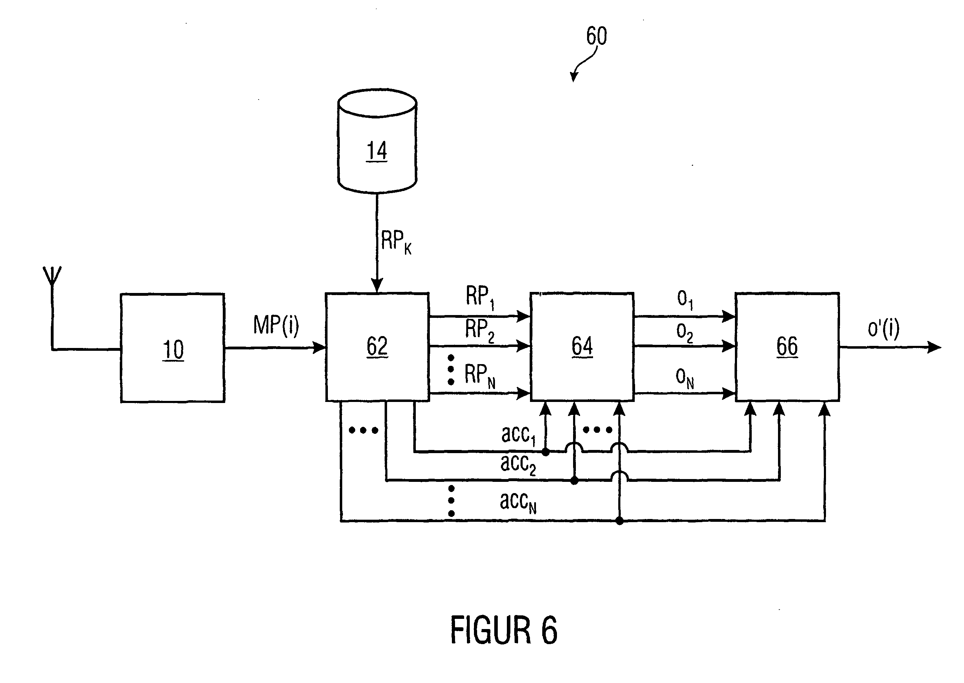

Nachdem, gemäß dem im Vorhergehenden beschriebenen Konzept, Orientierungsinformationen in einer Referenzdatenbasis 14 hinterlegt wurden, ist es mit mobilen Endgeräten gemäß Ausführungsbeispielen der vorliegenden Erfindung möglich, dass diese ihre räumliche Orientierung in ihrer Umgebung selbst bestimmen bzw. schätzen. Dazu zeigt Fig. 6 schematisch eine Vorrichtung 60 zum Schätzen einer aktuellen Orientierung o(i) eines mobilen Endgeräts. An einer aktuellen geographischen Position ist ein aktuelles Messpaket MP(i) ermittelbar, welches eine Senderkennung und eine elektromagnetische Signaleigenschaft (z.B. RSSI-Wert, Empfangsleistungsspektrum, Signal-zu-Rauschleistungsverhältnis, etc.) eines Funksenders aufweist, der an der aktuellen geographischen Position mit der aktuellen Orientierung des mobilen Endgeräts zu einem aktuellen Messzeitpunkt empfangbar ist.

Die Vorrichtung 60 weist neben einer Sende/Empfangseinrichtung 10 eine Einrichtung 62 zum Ermitteln eines Übereinstimmungsmaßes $acc_k$ (k=1,2,...) zwischen dem aktuellen Messpaket MP(i) und einem Referenzmesspaket $RP_k$ (k=1,2,...) auf, welches eine Senderkennung, eine Referenzorientierung $o_k$ und eine elektromagnetische Signaleigenschaft eines Referenzfunksenders aufweist, der an einer dem Referenzmesspaket $RP_k$ zugeordneten geographischen Position mit der Referenzorientierung $_{Ok}$ zu einem vor dem aktuellen Messzeitpunkt i liegenden Referenzzeitpunkt empfangbar war. Die Einrichtung 62 ist mit einer Einrichtung 64 zum Auswählen wenigstens eines Referenzmesspakets $RP_n$ (n=1,2,...N; N ≤ 1) gekoppelt, welches ein Übereinstimmungsmaß $acc_n$ aufweist, das bestimmte Kriterien erfüllt. Ausgangsseitig ist die Einrichtung 64 mit einer Einrichtung 66 zum Bestimmen eines Schätzwerts o'(i) für die aktuelle Orientierung o(i) des mobilen Endgeräts basierend auf der Referenzorientierung $o_n$ (n=1,2,...N; N ≥ 1) des zumindest einen ausgewählten Referenzmesspakets $RP_n$ gekoppelt.

In der Einrichtung 62 werden Übereinstimmungsmaße bzw. Distanzwerte $acc_k$ beispielsweise gemäß den eingangs beschriebenen Gln. (1) oder (2) ermittelt. Das heißt, mittels der Einrichtung 62 werden zunächst diejenigen Referenzpakete $RP_n$ (n=1,2,...N; N ≥ 1) aus der Referenzdatenbasis 14 ermittelt, welche am besten zu dem aktuellen Messpaket MP(i) passen. Gemäß einem Ausführungsbeispiel der vorliegenden Erfindung kann der Schätzwert o' (i) für die aktuelle Orientierung ermittelt werden, indem als Schätzwert o'(i) die Referenzorientierung desjenigen Referenzpakets mit dem geringsten acc-Wert zurückgegeben wird.

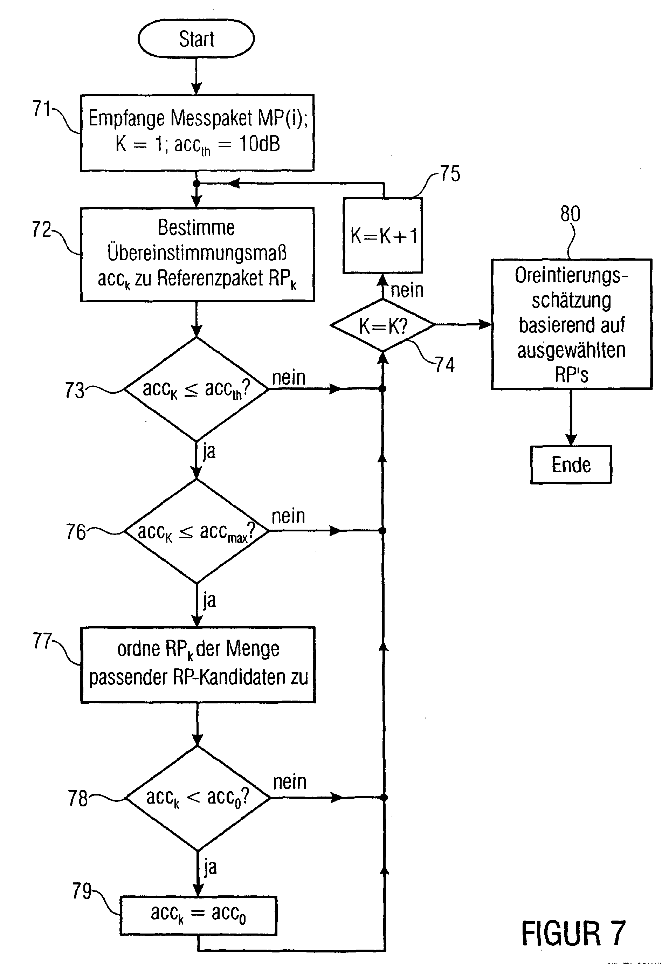

Des Weiteren kann die geschätzte Orientierung o'(i) über eine Menge von passenden Referenzpaketkandidaten, durch eine gewichtete Orientierungsmittelung durchgeführt werden. Diese Menge von passenden Referenzpaketkandidaten umfasst nicht sämtliche in der Abgleichphase betrachteten Referenzpakete, sondern nur solche, die bestimmte Voraussetzungen erfüllen. Ein erfindungsgemäßes Verfahren zur Auswahl geeigneter Referenzmesspakete soll im Folgenden anhand von Fig. 7 näher erläutert werden.

In einem ersten Schritt 71 wird mittels der Sende/Empfangseinrichtung 10 das aktuelle Messpaket MP(i) empfangen. Des Weiteren wird die Anzahl n von für die gewichtete Mittelung infrage kommenden Messpaketen mit 0 initialisiert und einem maximal zulässigen Distanzwert $acc_{th}$ ein Wert (z.B. 10 dB) zugeordnet. In einem darauf folgenden Schritt 72 wird ein Übereinstimmungsmaß $acc_k$ zwischen dem aktuellen Messpaket MP(i) und einem Referenzpaket $RP_k$ aus der Referenzdatenbasis 14 gemäß Gl. (1) oder (2) ermittelt. In einem dritten Schritt 73 wird geprüft, ob der in Schritt 72 ermittelte Distanzwert $acc_k$ kleiner als der maximal zulässige Distanzwert $acc_{th}$ ist. Ist dies nicht der Fall, so wird in einem Schritt 74 geprüft, ob bereits sämtliche K (relevanten) Referenzpakete der Referenzdatenbasis berücksichtigt wurden. Ist dies nicht der Fall, so wird k um 1 inkrementiert (Schritt 75) und das nächste Referenzpaket $RP_k$ aus der Referenzdatenbäsis 14 genommen und dem Schritt 72 zugeführt.

Ergibt der Vergleich in Schritt 73 hingegen, dass der in Schritt 72 ermittelte Distanzwert $acc_k$ unterhalb des maximal zulässigen Distanzwerts $acc_{th}$ liegt, so wird in einem Schritt 76 verglichen, ob der in Schritt 72 ermittelte Distanzwert $acc_k$ unterhalb einer von einem bisher besten Distanzwert $acc_0$ abhängigen Größe $acc_{max}$ liegt, wobei zu Beginn $acc_{max}$ gleich $acc_{th}$ gewählt werden kann. Ist dies der Fall, so wird das Referenzpaket $RP_k$ der Menge der passenden Referenzpaket-Kandidaten zugeordnet. Ist $acc_k$ größer als $acc_{max}$, was erst ab dem zweiten Durchlauf der in Fig. 7 dargestellten Schleife passieren kann, so geht es mit Schritt 74 weiter.

Nachdem in einem Schritt 77 das Referenzpaket $RP_k$ der Menge der passende RP-Kandidaten zugeordnet wurde, wird in einem darauf folgenden Schritt 78 geprüft, ob der Distanzwert $acc_k$ unterhalb des bisher besten Distanzwerts $acc_0$ liegt. Ist dies der Fall, so wird $acc_k$ zum nunmehr besten Distanzwert $acc_0$ (Schritt 79). Ist dies nicht der Fall, so geht es weiter mit Schritt 74.

Sind auf diese Weise sämtliche Referenzpakete aus der Referenzdatenbasis 14 mit dem aktuellen Messpaket verglichen worden, d.h. k = K, findet in einem Schritt 80 die Orientierungsschätzung basierend auf den N ausgewählten Referenzpaketen bzw. ihrer zugeordneten Orientierungsinformationen $o_n$ (n=1,2,...N; N $\geq$ 1). Dies geschieht in der Einrichtung 66.

Zusammenfassend geschieht gemäß einem Ausführungsbeispiel die Auswahl der passenden RP-Kandidaten aufgrund folgender Kriterien:

$$acc_k \leq acc_{max} \text{ UND } acc_k \leq acc_{th},$$

$$acc_{max} = acc_0 * LIMIT.$$

Dabei ist $aCC_{max}$ eine abhängig vom besten Distanz- bzw. Übereinstimmungsmaß $acc_0$ ermittelte Größe. $acc_0$ soll im Folgenden auch als erstes Bezugsübereinstimmungsmaß bezeichnet werden. Die Einrichtung 64 zum Auswählen ist also gemäß Ausführungsbeispielen angepasst, um das wenigstens eine Referenzmesspaket $RP_n$ derart auszuwählen, dass sein Übereinstimmungsmaß $acc_n$ nicht um mehr als einen vorbestimmten Wert von dem ersten Bezugsübereinstimmungsmaß $acc_0$ eines Bezugsreferenzmesspakets $RP_0$ abweicht, welches eine höchste Übereinstimmung zu dem aktuellen Messpaket MP(i) hat. Der vorbestimmte Abweichungswert kann gemäß (LIMIT - 1)*$acc_0$ bestimmt werden. LIMIT kann dabei geeignet gewählt werden, beispielsweise 1.0 $\leq$ LIMIT $\leq$ 1.5. $acc_{th}$ ist der maximal zulässige Distanz- bzw. Übereinstimmungswert und kann z.B. in einem Bereich von 5 dB $\leq$ $aCC_{th}$ $\leq$ 20 dB liegen. $acc_{th}$ soll im Folgenden auch als zweites Bezugsübereinstimmungsmaß bezeichnet werden. Die Einrichtung 64 zum Auswählen kann also ausgebildet sein, um ein Referenzmesspaket $RP_n$ auszuwählen, welches ein ermitteltes Übereinstimmungsmaß $acc_n$ aufweist, das zusätzlich unterhalb des zweiten Bezugsübereinstimmungsmaß $acc_{th}$ liegt, welches eine benötigte Mindestübereinstimmung eines Referenzmesspakets zu dem aktuellen Messpaket MP(i) repräsentiert. Die hier angebeben Bereiche sind lediglich exemplarisch. In der Praxis werden sie von der verwendeten Funktechnologie, der Topographie, der Bewegungsgeschwindigkeit, usw., abhängen.

Um zu erreichen, dass ein ausgewähltes Referenzpaket $RP_n$ (n=1,2,...N; N $\geq$ 1) mit einem geringen acc-Wert bzw. eine diesem zugeordnete Orientierung $o_n$ (n=1, 2, ... N; N $\geq$ 1) bei der Orientierungsschätzung ein höheres Gewicht erhält, wird das zu entsprechende Gewicht gemäß einem Ausführungsbeispiel indirekt proportional zu dem acc-Wert $acc_n$ (n=1,2,...N; Nu 1) gewählt. Das heißt, die Einrichtung 66 zum Bestimmen des Schätzwerts o'(i) ist angepasst, um das Gewicht einer einem ausgewählten Referenzpaket entsprechenden Referenzorientierung $o_n$ (n=1,2,...N; N ≥ 1) indirekt proportional zu dem der Referenzorientierung zugeordneten Übereinstimmungsmaß $acc_n$ (n=1,2,...N; N ≥ 1) zu wählen. Das Gewicht $w_n$ kann gemäß

$$w_n = \frac{1}{acc_n^{norm}} \qquad\qquad (3)$$

gewählt werden, wobei norm beispielsweise in einem Bereich 1 ≤ norm ≤ 4 gewählt werden kann.

Gemäß einem anderen Ausführungsbeispiel ist die Einrichtung 66 zum Bestimmen des Schätzwerts o'(i) angepasst, um das Gewicht $w_n$ (n=1,2,...N; N ≥ 1) einer entsprechenden Referenzorientierung $o_n$ (n=1,2,...N; N ≥ 1) indirekt proportional zu einer Differenz zwischen dem der entsprechenden Referenzorientierung $o_n$ (n=1,2,...N; N ≥ 1) zugeordneten Übereinstimmungsmaß $acc_n$ und dem ersten Bezugsübereinstimmungsmaß $acc_0$ zu wählen. Das heißt, beispielsweise wird ein Gewicht gemäß

$$w_n = \frac{1}{(acc_n - acc_0 + 1)^{norm}} \qquad\qquad (4)$$

gewählt. Dabei kann norm beispielsweise in einem Bereich 1 ≤ norm ≤ 4 gewählt werden. Es wird hier auf den acc-Wert $acc_0$ des besten Abgleich-Ergebnisses normiert, um eine höhere Differenzierbarkeit zu erreichen.

Der Schätzwert o'(i) für die aktuelle Orientierung des mobilen Endgeräts kann dann z.B. gemäß

$$o'(i) = \frac{1}{\sum\limits_{n=1}^{N} w_n} \cdot \sum_{n=1}^{N} w_n \cdot o_n \qquad\qquad (5)$$

berechnet werden.

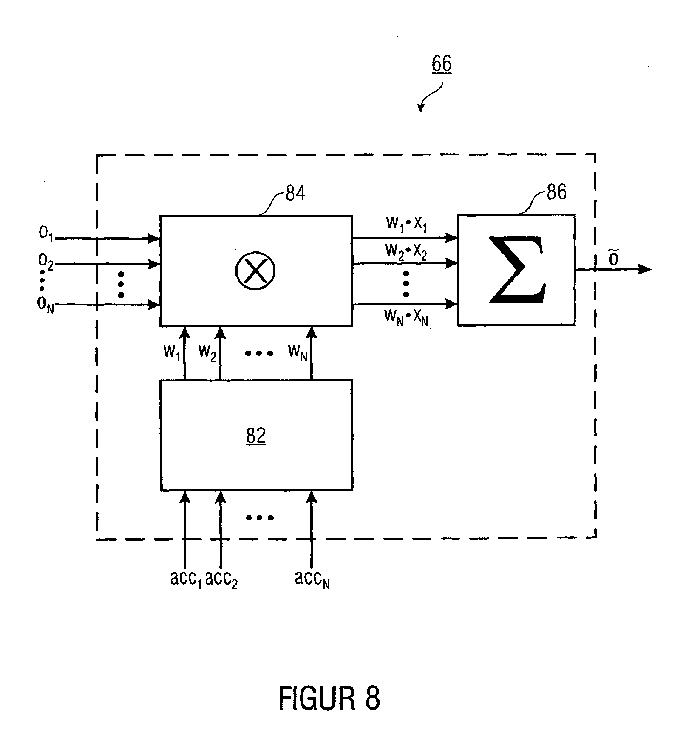

Ein Blockdiagramm der Einrichtung 66 zum Bestimmen des Schätzwerts o'(i) für die aktuelle Orientierung des mobilen Endgeräts basierend auf Referenzorientierungen $o_n$ der ausgewählten Referenzmesspakete $RP_n$ (n=1,2,...N; N ≥ 1) ist in Fig. 8 dargestellt.

Die von der Einrichtung 62 zum Ermitteln zumindest eines Übereinstimmungsmaße bzw. Differenzwerts herrührenden $aCC_n$ (n=1,2,...N; N ≥ 1) werden in einem Block 82 verarbeitet, so dass ausgangsseitig zu diesem Block 82 die Gewichte $w_n$ (n=1,2,...N; N ≥ 1) erhalten werden. Jedes der Gewichte $w_n$ wird in einem Block 84 mit seiner entsprechenden Referenzorientierung $o_n$ (n=1,2,...N; N ≥ 1) multipliziert. Das Ergebnis wird dann einem Summationsblock 86 zugeführt, um ausgangsseitig den Schätzwert o'(i) für die aktuelle Orientierung des mobilen Endgeräts zu erhalten.

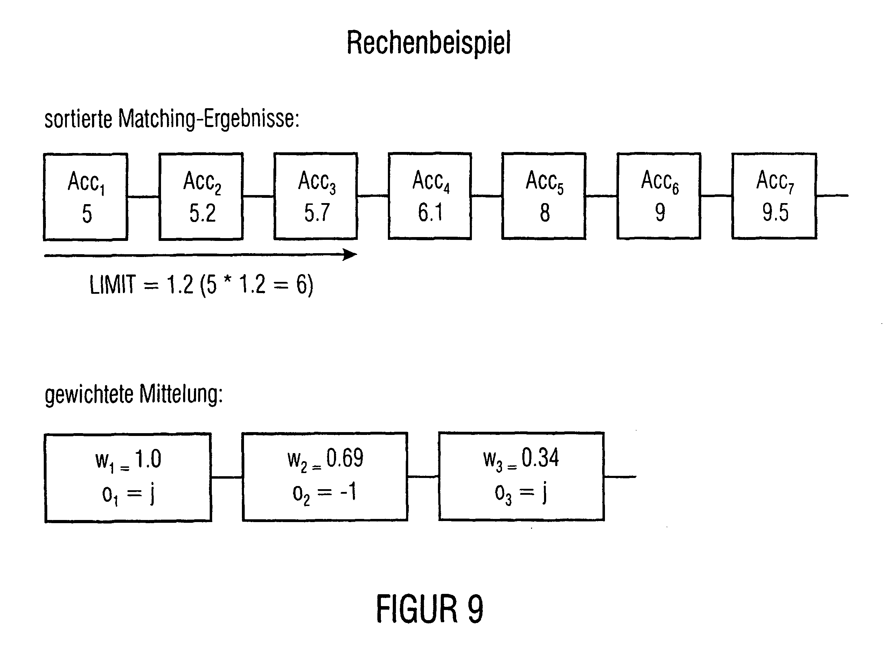

Mit Bezug auf Fig. 9 soll abschließend noch ein Rechenbeispiel zur Erläuterung des erfindungsgemäßen Konzepts gegeben werden.

Fig. 9a zeigt eine Reihe von aufsteigend sortierten Matching-Ergebnissen, d.h. ermittelter Distanzwerte $acc_k$ zwischen einem aktuellen Messpaket und unterschiedlichen Referenzpaketen. Exemplarisch weist der beste Distanzwert $acc_0$ des Referenzpakets mit der höchsten Übereinstimmung zu dem aktuellen Messpaket einen Wert von 5 dB auf. Dieser erste Bezugsreferenzwert $acc_0$ wird nun mit einem Wert LIMIT = 1.2 multipliziert, um einen Wert $acc_{max}$ = 6 zu erhalten. Nachdem nur diejenigen Referenzpakete als Kandidaten ausgewählt werden, deren Distanzwerte die Bedingung $aCC_k ≤ acc_{max}$ erfüllen, werden lediglich die Referenzpakete entsprechend den ersten drei acc-Werten ausgewählt.

Aus dem ersten acc-Wert $acc_1$ = 5 dB ergibt sich mit Gl. (4) ein Gewicht $w_1$ - 1. Die entsprechende Referenzorientierung $o_1$ = j (mit $j^2$ - 1, z.B. entsprechend Norden, oder 0°) wird nun mit diesem Gewicht $w_1$ gewichtet. Für $aCC_2$ = 5.2 ergibt sich ein Gewicht $w_2$ = 0.69. Die zugehörige Referenzorientierung $o_2$ = -1 (z.B. entsprechend Westen, oder 270°) wird mit diesem Gewicht gewichtet. Für $acc_3$ - 5.7 ergibt sich ein Gewicht $w_3$ von 0.34. Dieser Wert wird mit der entsprechenden Referenzorientierung $o_3$ = j multipliziert und schließlich werden die drei gewichteten Referenzorientierungen aufsummiert, so dass sich ein Wert von o'(i) - 1/2.03*(j - 0.69 + 0.34j) = -0.34 + 0.66j. Daraus lässt sich die Orientierung zu ca. 300° bestimmen, was auch als Nord-Nord-West interpretiert werden könnte.

Soll das Ergebnis einer erfindungsgemäßen Orientierungsschätzung beispielsweise alle Werte zwischen 0 und 360° erlauben, so sind durch eine hier exemplarisch dargestellte gewichtete Mittelung an einem Ort Referenzpunkte von mindestens drei unterschiedlichen Orientierungen nötig (0°, 120°, 240°). Oftmals reicht es allerdings auch aus, nur zwei mögliche Orientierungen zu haben. Dies ist beispielsweise dann der Fall, wenn man sich entlang einer Straße bewegt. Anders verhält es sich bei größeren Freiflächen, z.B. größere Plätze, Messehallen, Kreuzungen, usw.

Es sind zahlreiche Anwendungen denkbar, wo es sinnvoll ist, neben einer Position auch eine Orientierung zu erhalten.

Damit ist die Ausrichtung eines Nutzers nach den Himmelsrichtungen, aber auch die relative Ausrichtung auf einem Grundstück oder in einem Gebäude gemeint. Dazu ist die Einrichtung 44 zum Erfassen der aktuellen Orientierung angepasst, die aktuelle Orientierung in einem Bezugskoordinatensystem zu erfassen, wobei das Bezugskoordinatensystem als Koordinatenursprung einen Bezugspunkt eines Gebäudes, wie z.B. einen Eckpunkt des Gebäudes, aufweist. Ausführungsbeispiele der vorliegenden Erfindung können z.B. in einem Führungs- oder Informationssystem integriert werden, welches im innerstädtischen Bereich verfügbar ist und dort eine hohe Positionsbestimmungsgenauigkeit ermöglicht.

Die Endgeräte, in denen das erfindungsgemäße Verfahren ablaufen kann, sind nicht auf die bereits erwähnten PDA's oder Mobiltelefone beschränkt. Vielmehr kommen sämtliche andere, mit Sende- und Empfangseinrichtungen ausgestatteten Endgeräte in Betracht. Dies können beispielsweise Digitalkameras, Autoradios oder andere in Kfz's oder Motorrädern eingebaute Komponenten oder dergleichen sein.

Abhängig von den Gegebenheiten können die erfindungsgemäßen Verfahren in Hardware oder in Software implementiert werden. Die Implementation kann auf einem digitalen Speichermedium, insbesondere einer Diskette oder einer CD mit elektronisch auslesbaren Steuersignalen erfolgen, die so mit einem programmierbaren Computersystem zusammenwirken können, dass das erfindungsgemäße Verfahren ausgeführt wird. Allgemein besteht die Erfindung somit auch in einem Computer-Programm-Produkt mit einem auf einem maschinenlesbaren Träger gespeicherten Programmcode zur Durchführung des erfindungsgemäßen Verfahrens, wenn das Computer-Programm-Produkt auf einem Rechner abläuft. In anderen Worten ausgedrückt kann die Erfindung somit als ein Computer-Programm mit einem Programmcode bzw. Instruktionen zur Durchführung aller Schritte des Verfahrens realisiert werden, wenn das Computer-Programm auf einem Computer oder Mikrocontroller abläuft.

**Patentansprüche**

1. Vorrichtung (60) zum Schätzen einer aktuellen Orientierung (o(i)) eines mobilen Endgeräts an einer aktuellen geografischen Position, mit folgenden Merkmalen:

   einer Einrichtung (62) konfiguriert zum Ermitteln eines Übereinstimmungsmaßes zwischen einem aktuellen Messpaket (MP(i)) für die aktuelle geografische Position, das eine Senderkennung und eine elektromagnetische Signaleigenschaft mindestens eines an der aktuellen geografischen Position mit der aktuellen Orientierung (o(i)) des mobilen Endgeräts zu einem aktuellen Messzeitpunkt (i) empfangenen Funksenders (22) aufweist, und einem Referenzmesspaket ($RP_k$), welches eine Senderkennung und eine elektromagnetische Signaleigenschaft mindestens eines Referenzfunksenders, sowie eine Referenzorientierung aufweist, der an einer dem Referenzmesspaket zugeordneten geografischen Referenzposition mit der Referenzorientierung zu einem vor dem aktuellen Messzeitpunkt liegenden Referenzzeitpunkt empfangen wurde;
   einer Einrichtung (64) konfiguriert zum Auswählen wenigstens eines Referenzmesspakets ($RP_n$), welches ein Übereinstimmungsmaß aufweist; und
   einer Einrichtung (66) konfiguriert zum Bestimmen eines Schätzwerts (o'(i)) für die aktuelle Orientierung des mobilen Endgeräts basierend auf der Referenzorientierung des zumindest einen ausgewählten Referenzmesspakets ($RP_n$).

2. Vorrichtung gemäß Anspruch 1, bei der die Einrichtung (64) konfiguriert zum Auswählen angepasst ist, um das wenigstens eine Referenzmesspaket ($RP_n$) derart auszuwählen, dass sein Übereinstimmungsmaß nicht um mehr als einen vorbestimmten Wert von einem ersten Bezugsübereinstimmungsmaß eines Bezugsreferenzmesspakets abweicht, welches eine höchste Übereinstimmung zu dem aktuellen Messpaket (MP(i))hat.

3. Vorrichtung gemäß Anspruch 2, wobei die Einrichtung (64) konfiguriert zum Auswählen ausgebildet ist, um ein Referenzmesspaket ($RP_n$) auszuwählen, welches ein ermitteltes Übereinstimmungsmaß aufweist, das zusätzlich unterhalb eines zweiten Bezugsübereinstimmungsmaß liegt, welches eine benötigte Mindestübereinstimmung eines Referenzmesspakets zu dem aktuellen Messpaket (MP(i)) repräsentiert.

4. Vorrichtung gemäß einem der vorhergehenden Ansprüche, bei der die Einrichtung (66) konfiguriert zum Bestimmen des Schätzwerts (o'(i)) angepasst ist, um den Schätzwert basierend auf einer gewichteten Summe von ausgewählten Referenzmesspaketen ($RP_n$) entsprechenden Referenzorientierungen zu bestimmen, wobei ein Gewicht ($w_n$) einer Referenzorientierung von dem zu dem entsprechenden Referenzmesspaket ($RP_n$) ermittelten Übereinstimmungsmaß abhängt.

**5.** Vorrichtung gemäß Anspruch 4, bei der die Einrichtung (66) konfiguriert zum Bestimmen des Schätzwerts (o'(i)) angepasst ist, um das Gewicht ($w_n$) einer entsprechenden Referenzorientierung indirekt proportional zu dem der Referenzorientierung zugeordneten Übereinstimmungsmaß zu wählen.

**6.** Vorrichtung gemäß Anspruch 4, bei der die Einrichtung (66) konfiguriert zum Bestimmen des Schätzwerts angepasst ist, um das Gewicht ($w_n$) einer entsprechenden Referenzorientierung indirekt proportional zu einer Differenz zwischen dem zu der entsprechenden Referenzorientierung zugeordneten Übereinstimmungsmaß und dem ersten Bezugsübereinstimmungsmaß zu wählen.

**7.** Vorrichtung gemäß einem der vorhergehenden Ansprüche, bei der die Einrichtung (62) konfiguriert zum Ermitteln des Übereinstimmungsmaßes ausgebildet ist, um das Übereinstimmungsmaß basierend auf Differenzen zwischen den elektromagnetischen Signaleigenschaften des Referenzmesspakets ($RP_k$) und den elektromagnetischen Signaleigenschaften des aktuellen Messpakets (MP(i)) zu bestimmen.

**8.** Vorrichtung gemäß Anspruch 7, bei der die Differenzen zwischen elektromagnetischen Signaleigenschaften von sowohl in dem aktuellen Messpaket (MP(i)) als auch in dem Referenzmesspaket ($RP_k$) enthaltenen Funksendern gebildet werden.

**9.** Vorrichtung gemäß Anspruch 7 oder 8, bei der die Einrichtung (62) konfiguriert zum Ermitteln des Übereinstimmungsmaßes ausgebildet ist, um dem Referenzmesspaket ein kleineres Übereinstimmungsmaß zuzuordnen, je kleiner eine Summe der Differenzen ist.

**10.** Vorrichtung gemäß einem der vorhergehenden Ansprüche, die zum Ermitteln des aktuellen Messpakets (MP(i)) eine Antenneneinrichtung (32) mit einer Antennenrichtcharakteristik (34) aufweist und wobei die Orientierung des mobilen Endgeräts durch eine räumliche Ausrichtung der Hauptkeule der Antennenrichtcharakteristik (34) definiert ist.

**11.** Vorrichtung gemäß einem der vorhergehenden Ansprüche, wobei die elektromagnetischen Signaleigenschaften mit einer Empfangsfeldstärke in Beziehung stehende Signaleigenschaften von Funksignalen sind.

**12.** Vorrichtung gemäß Anspruch 11, wobei eine elektromagnetische Signaleigenschaft ein RSSI-Wert, ein Empfangsleistungsspektrum oder ein Signal-zu-Rauschleistungsverhältnis ist.

**13.** Vorrichtung gemäß einem der vorhergehenden Ansprüche, wobei die Vorrichtung in einem WLAN-fähigen Endgerät implementiert ist.

**14.** Verfahren zum Schätzen einer aktuellen Orientierung (o(i)) eines mobilen Endgeräts an einer aktuellen geografischen Position, mit folgenden Merkmalen:

Ermitteln (72) eines Übereinstimmungsmaßes zwischen einem aktuellen Messpaket (MP(i)) für die aktuelle geografische Position, das eine Senderkennung und eine elektromagnetische Signaleigenschaft mindestens eines an der aktuellen geografischen Position mit der aktuellen Orientierung (o(i)) des mobilen Endgeräts zu einem aktuellen Messzeitpunkt (i) empfangenen Funksenders (22) aufweist, und einem Referenzmesspaket ($RP_k$), welches eine Senderkennung und eine elektromagnetische Signaleigenschaft mindestens eines Referenzfunksenders, sowie eine Referenzorientierung ($o_k$) aufweist, der an einer dem Referenzmesspaket zugeordneten geografischen Referenzposition mit der Referenzorientierung zu einem vor dem aktuellen Messzeitpunkt liegenden Referenzzeitpunkt empfangen wurde;
Auswählen (77) wenigstens eines Referenzmesspakets ($RP_n$), welches ein Übereinstimmungsmaß aufweist; und
Bestimmen (80) eines Schätzwerts (o'(i)) für die aktuelle Orientierung des mobilen Endgeräts basierend auf der Referenzorientierung des zumindest einen ausgewählten Referenzmesspakets ($RP_n$).

**15.** Computer-Programm mit Instruktionen zum Ausführen aller Schritte des Verfahrens nach Anspruch 14, wenn das Computer-Programm auf einem Computer oder Mikrocontroller abläuft.

**16.** Vorrichtung (40) zum Speichern einer aktuellen Orientierung (o(i); 52) eines mobilen Endgeräts an einer aktuellen geografischen Position (51), wobei ein aktuelles Messpaket (MP(i)) für die aktuelle geografische Position (51) eine Senderkennung (54) und eine elektromagnetische Signaleigenschaft (55) mindestens eines an der aktuellen geografischen Position mit der aktuellen Orientierung (o(i); 52) des mobilen Endgeräts zu einem aktuellen Messzeitpunkt (i; 57) empfangenen Funksenders aufweist, mit folgenden Merkmalen:

einer Einrichtung (44) konfiguriert zum Erfassen der aktuellen Orientierung (o(i); 52), wobei die Einrichtung (44) zum Erfassen der aktuellen Orientierung gemäß der Vorrichtung nach Anspruch 1 gebildet ist; und
einer Einrichtung (46) konfiguriert zum Speichern der erfassten aktuellen Orientierung (o(i); 52) zusammen mit dem ermittelten Messpaket (MP(i)) in einer Referenzdatenbasis (14).

17. Vorrichtung gemäß Anspruch 16, die ferner eine Einrichtung konfiguriert zum Bestimmen der aktuellen geografischen Position (51) aufweist und bei der die Einrichtung konfiguriert zum Speichern (46) angepasst ist, die erfasste aktuelle Orientierung (o(i); 52) zusammen mit dem ermittelten Messpaket (MP(i)) und der bestimmten aktuellen Position (51) als Referenzpaket (RP) in der Referenzdatenbasis (14) zu speichern.

18. Vorrichtung gemäß einem der Ansprüche 16 bis 17, bei der die Einrichtung (44) zum Erfassen angepasst ist, die aktuelle Orientierung (o(i); 52) in einem Bezugskoordinatensystem zu erfassen, wobei das Bezugskoordinatensystem als Koordinatenursprung einen Bezugspunkt eines Gebäudes aufweist.

19. Vorrichtung gemäß einem der Ansprüche 16 bis 18, die zum Ermitteln des aktuellen Messpakets (MP(i)) eine Antenneneinrichtung (32) mit einer Antennenrichtcharakteristik (34) aufweist und wobei die Orientierung des mobilen Endgeräts durch eine räumliche Ausrichtung der Hauptkeule der Antennenrichtcharakteristik definiert ist.

20. Vorrichtung gemäß einem der Ansprüche 16 bis 19, bei der die Einrichtung (46) zum Speichern angepasst ist, um die erfasste aktuelle Orientierung (o(i); 52) in einem quantisierten, digitalen Format zu speichern.

21. Verfahren zum Speichern einer aktuellen Orientierung (o(i); 52) eines mobilen Endgeräts an einer aktuellen geografischen Position (51), wobei an der aktuellen geografischen Position (51) ein aktuelles Messpaket (MP(i)) ermittelt wird, welches eine Senderkennung (54) und eine elektromagnetische Signaleigenschaft (55) mindestens eines Funksenders aufweist, der an der aktuellen geografischen Position mit der aktuellen Orientierung (o(i); 52) des mobilen Endgeräts zu einem aktuellen Messzeitpunkt (i; 57) empfangen wird, mit folgenden Merkmalen:

Erfassen der aktuellen Orientierung (o(i); 52), wobei das Erfassen der aktuellen Orientierung gemäß dem Verfahren nach Anspruch 14 ausgeführt wird; und
Speichern der erfassten aktuellen Orientierung (o(i); 52) zusammen mit dem ermittelten Messpaket (MP(i)) in einer Referenzdatenbasis (14).

22. Computer-Programm mit Instruktionen zum Ausführen aller Schritte des Verfahrens nach Anspruch 21, wenn das Computer-Programm auf einem Computer oder Mikrocontroller abläuft.

**Claims**

1. A device (60) configured for estimating a current orientation (o(i)) of a mobile terminal device at a current geographical position, comprising:

a means (62) configured for determining an accordance measure between a current measurement package (MP(i)) for the current geographical position, said current measurement package (MP(i)) comprising a transmitter identification and an electromagnetic signal characteristic of at least one radio transmitter (22) received at the current geographical position with the current orientation (o(i)) of the mobile terminal device at a current measurement time (i), and a reference measurement package ($RP_k$) comprising a transmitter identification and an electromagnetic signal characteristic of at least one reference radio transmitter, as well as a reference orientation, which reference radio transmitter was received at a geographical reference position associated with the reference measurement package with the reference orientation at a reference time lying before the current measurement time;
a means (64) configured for selecting at least one reference measurement package ($RP_n$) comprising an accordance measure ($acc_n$); and
a means (66) configured for determining an estimate (o'(i)) configured for the current orientation of the mobile terminal device based on the reference orientation of the at least one selected reference measurement package ($RP_n$).

**2.** The device according to claim 1, wherein the means (64) configured for selecting is adapted to select the at least one reference measurement package ($RP_n$) such that its accordance measure does not deviate by more than a predetermined value from a first reference accordance measure of a reference reference measurement package which has a highest accordance with the current measurement package (MP(i)).

**3.** The device according to claim 2, wherein the means (64) configured for selecting is implemented to select a reference measurement package ($RP_n$) comprising a determined accordance measure additionally lying below a second reference accordance measure representing a required minimum accordance of a reference measurement package with the current measurement package (MP(i)).

**4.** The device according to one of the preceding claims, wherein the means (66) configured for determining the estimate (o'(i)) is adapted to determine the estimate based on a weighted sum of selected reference measurement packages ($RP_n$) corresponding to reference orientations, wherein a weight ($w_n$) of a reference orientation depends on the accordance measure determined with respect to the corresponding reference measurement package ($RP_n$).

**5.** The device according to claim 4, wherein the means (66) configured for determining the estimate (o'(i)) is adapted to select the weight ($w_n$) of a corresponding reference orientation inversely proportional to the accordance measure associated with the reference orientation.

**6.** The device according to claim 4, wherein the means (66) configured for determining the estimate is adapted to select the weight ($w_n$) of a corresponding reference orientation inversely proportional to a difference between the accordance measure associated with the corresponding reference orientation and the first reference accordance measure.

**7.** The device according to one of the preceding claims, wherein the means (62) configured for determining the accordance measure is implemented to determine the accordance measure based on differences between the electromagnetic signal characteristics of the reference measurement package ($RP_k$) and the electromagnetic signal characteristics of the current measurement package (MP(i)).

**8.** The device according to claim 7, wherein the differences between electromagnetic signal characteristics are formed by radio transmitters contained both in the current measurement package (MP(i)) and also in the reference measurement package ($RP_k$).

**9.** The device according to claims 7 or 8, wherein the means (62) configured for determining the accordance measure is implemented to allocate a smaller accordance measure to the reference measurement package, the smaller a sum of the differences is.

**10.** The device according to one of the preceding claims, comprising, for determining the current measurement package (MP(i)), an antenna means (32) with an antenna directional characteristic (34), and wherein the orientation of the mobile terminal device is defined by a spatial orientation of the main lobe of the antenna directional characteristic (34).

**11.** The device according to one of the preceding claims, wherein the electromagnetic signal characteristics are signal characteristics of radio signals related to a receive field strength.

**12.** The device according to claim 11, wherein an electromagnetic signal characteristic is an RSSI value, a receive power spectrum or a signal-to-noise power ratio.

**13.** The device according to one of the preceding claims, wherein the device is implemented in a WLAN-capable terminal device.

**14.** A device (60) configured for estimating a current orientation (o(i)) of a mobile terminal device at a current geographical position, comprising:

determining (72) an accordance measure between a current measurement package (MP(i)) for the current geographical position, said current measurement package (MP(i)) comprising a transmitter identification and an electromagnetic signal characteristic of at least one radio transmitter (22) received at the current geographical position with the current orientation (o(i)) of the mobile terminal device at a current measurement time (i), and a reference measurement package ($RP_k$) comprising a transmitter identification and an electromagnetic signal characteristic of at least one reference radio transmitter, as well as a reference orientation ($o_k$), which reference radio transmitter was received at a geographical reference position associated with the reference measurement package with the reference orientation at a reference time lying before the current measurement time;

selecting (77) at least one reference measurement package ($RP_n$) comprising an accordance measure ($acc_n$); and

determining (80) an estimate ($o'(i)$) configured for the current orientation of the mobile terminal device based on the reference orientation ($o_n$) of the at least one selected reference measurement package ($RP_n$).

15. A computer program comprising instructions for executing all of the steps of the method according to claim 14 when the computer program is executed on a computer or microcontroller.

16. A device (40) configured for storing a current orientation ($o(i)$; 52) of a mobile terminal device at a current geographical position (51), wherein a current measurement package ($MP(i)$) for the current geographical position (51) comprises a transmitter identification (54) and an electromagnetic signal characteristic (55) of at least one radio transmitter received at the current geographical position with the current orientation ($o(i)$; 52) of the mobile terminal device at a current measurement time (i; 57), comprising:

a means (44) configured for detecting the current orientation ($o(i)$; 52), the means (44) for detecting the current orientation being formed in accordance with the device of claim 1; and

a means (46) configured for storing the detected current orientation ($o(i)$; 52) together with the determined measurement package ($MP(i)$) in a reference database (14).

17. The device according to claim 16, further comprising a means configured for determining the current geographical position (51), and wherein the means configured for storing (46) is adapted to store the detected current orientation ($o(i)$; 52) together with the determined measurement package ($MP(i)$) and the determined current position (51) as a reference package (RP) in the reference database (14).

18. The device according to one of claims 16 to 17, wherein the means (44) configured for detecting is adapted to detect the current orientation ($o(i)$; 52) in a reference coordinate system, wherein the reference coordinate system comprises a reference point of a building as a coordinate origin.

19. The device according to one of claims 16 to 18, which comprises, for determining the current measurement package ($MP(i)$), an antenna means (32) with an antenna directional characteristic (34) and wherein the orientation of the mobile terminal device is defined by a spatial alignment of the main lobe of the antenna directional characteristic.

20. The device according to one of claims 16 to 19, wherein the means (46) configured for storing is adapted to store the detected current orientation ($o(i)$; 52) in a quantized, digital format.

21. A method for storing a current orientation ($o(i)$; 52) of a mobile terminal device at a current geographical position (51), wherein, at the current geographical position (51), a current measurement package ($MP(i)$) is determined which comprises a transmitter identification (54) and an electromagnetic signal characteristic (55) of at least one radio transmitter which is received at the current geographical position with the current orientation ($o(i)$; 52) of the mobile terminal device at a current measurement time (i; 57), comprising:

detecting the current orientation ($o(i)$; 52), said detecting of the current orientation being performed in accordance with the method of claim 14; and

storing the detected current orientation ($o(i)$; 52) together with the determined measurement package ($MP(i)$) in a reference database (14).

22. A computer program comprising instructions for executing all of the steps of the method of claim 21, when the computer program is executed on a computer or microcontroller.

## Revendications

1. Dispositif (60) d'estimation d'une orientation actuelle ($o(i)$) d'un terminal mobile à une position géographique actuelle, aux caractéristiques suivantes:

un moyen (62) configuré pour déterminer un degré de coïncidence entre un paquet de mesure actuel (MP(i)) pour la position géographique actuelle présentant une identification d'émetteur et une propriété de signal électromagnétique d'au moins un émetteur radio (22) reçu à un moment de mesure actuel (i) à la position géographique actuelle avec l'orientation actuelle (o(i)) du terminal mobile, et un paquet de mesure de référence (RP$_k$) qui présente une identification d'émetteur et une propriété de signal électromagnétique d'au moins un émetteur radio de référence, ainsi qu'une orientation de référence, qui a été reçu à une position géographique de référence associée au paquet de mesure de référence avec l'orientation de référence à un moment de référence situé avant le moment de mesure actuel;

un moyen (64) configuré pour sélectionner au moins un paquet de mesure de référence (RP$_n$) présentant un degré de coïncidence; et

un moyen (66) configuré pour déterminer une valeur estimée (o'(i)) pour l'orientation actuelle du terminal mobile sur base de l'orientation de référence de l'au moins un paquet de mesure de référence sélectionné (RP$_n$).

**2.** Dispositif selon la revendication 1, dans lequel le moyen (64) configuré pour sélectionner est adapté pour sélectionner l'au moins un paquet de mesure de référence (RP$_n$) de sorte que son degré de coïncidence ne s'écarte pas de plus d'une valeur prédéterminée d'un premier degré de coïncidence de référence d'un paquet de mesure de référence qui présente une coïncidence la plus grande avec le paquet de mesure actuel (MP(i)).

**3.** Dispositif selon la revendication 2, dans lequel le moyen (64) configuré pour sélectionner est adapté pour sélectionner un paquet de mesure de référence (RP$_n$) présentant un degré de coïncidence déterminé qui se situe en outre au-dessous d'un deuxième degré de coïncidence de référence qui représente une coïncidence minimale requise d'un paquet de mesure de référence avec le paquet de mesure actuel (MP(i)).

**4.** Dispositif selon l'une des revendications précédentes, dans lequel le moyen (66) configuré pour déterminer la valeur estimée (o'(i)) est adapté pour déterminer la valeur estimée sur base d'une somme pondérée d'orientations de référence correspondant à des paquets de mesure de référence sélectionnés (RP$_n$), dans lequel un poids (w$_n$) d'une orientation de référence dépend du degré de coïncidence déterminé correspondant au paquet de mesure de référence (RP$_n$).

**5.** Dispositif selon la revendication 4, dans lequel le moyen (66) configuré pour déterminer la valeur estimée (o'(i)) est adapté pour sélectionner le poids (w$_n$) d'une orientation de référence correspondante indirectement proportionnelle au degré de coïncidence associé à l'orientation de référence.

**6.** Dispositif selon la revendication 4, dans lequel le moyen (66) configuré pour déterminer la valeur d'estimation est adapté pour sélectionner le poids (w$_n$) d'une orientation de référence correspondante indirectement proportionnelle à une différence entre le degré de coïncidence associé à l'orientation de référence correspondante et le premier degré de coïncidence de référence.

**7.** Dispositif selon l'une des revendications précédentes, dans lequel le moyen (62) configuré pour déterminer la degré de coïncidence est réalisé pour déterminer le degré de coïncidence sur base de différences entre les propriétés de signal électromagnétiques du paquet de mesure de référence (RP$_k$) et les propriétés de signal électromagnétiques du paquet de mesure actuel (MP(i)).

**8.** Dispositif selon la revendication 7, dans lequel les différences entre les propriétés de signal électromagnétiques sont constituées des émetteurs radio contenus tant dans le paquet de mesure actuel (MP(i)) que dans le paquet de mesure de référence (RP$_k$).

**9.** Dispositif selon la revendication 7 ou 8, dans lequel le moyen (62) configuré pour déterminer le degré de coïncidence est réalisé pour associer au paquet de mesure de référence un degré de coïncidence inférieur plus une somme des différences est petite.

**10.** Dispositif selon l'une des revendications précédentes, présentant pour la détermination du paquet de mesure actuel (MP(i)) un aménagement d'antenne (32) avec une caractéristique de direction d'antenne (34) et dans lequel l'orientation du terminal mobile est définie par une orientation spatiale du lobe principal de la caractéristique de direction d'antenne (34).

**11.** Dispositif selon l'une des revendications précédentes, dans lequel les propriétés de signal électromagnétiques sont des propriétés de signal de signaux radio ayant un rapport avec une intensité de champ de réception.

**12.** Dispositif selon la revendication 11, dans lequel une propriété de signal électromagnétique est une valeur RSSI, un spectre de puissance de réception ou un rapport de puissance signal-bruit.

**13.** Dispositif selon l'une des revendications précédentes, dans lequel le dispositif est mis en oeuvre dans un terminal de réseau local sans fil.

**14.** Procédé d'estimation d'une orientation actuelle (o(i)) d'un terminal mobile à une position géographique actuelle, aux caractéristiques suivantes:

déterminer (72) un degré de coïncidence entre un paquet de mesure actuel (MP(i)) pour la position géographique actuelle présentant une identification d'émetteur et une propriété de signal électromagnétique d'au moins un émetteur radio (22) reçu à un moment de mesure actuel (i) à la position géographique actuelle avec l'orientation actuelle (o(i)) du terminal mobile, et un paquet de mesure de référence ($RP_k$) qui présente une identification d'émetteur et une propriété de signal électromagnétique d'au moins un émetteur radio de référence, ainsi qu'une orientation de référence ($o_k$), qui a été reçu à une position géographique de référence associée au paquet de mesure de référence avec l'orientation de référence à un moment de référence situé avant le moment de mesure actuel;

sélectionner (77) au moins un paquet de mesure de référence ($RP_n$) qui présente un degré de coïncidence; et déterminer (80) une valeur estimée (o'(i)) pour l'orientation actuelle du terminal mobile sur base de l'orientation de référence de l'au moins un paquet de mesure de référence sélectionné ($RP_n$).

**15.** Programme d'ordinateur avec des instructions pour réaliser toutes les étapes du procédé selon la revendication 14 lorsque le programme d'ordinateur est exécuté sur un ordinateur ou un microcontrôleur.

**16.** Dispositif (40) de mémorisation d'une orientation actuelle (o(i); 52) d'un terminal mobile à une position géographique actuelle (51), dans lequel un paquet de mesure actuel (MP(i)) pour la position géographique actuelle (51) présente une identification d'émetteur (54) et une propriété de signal électromagnétique (55) d'au moins un émetteur radio reçu à la position géographique actuelle avec l'orientation actuelle (o(i); 52) du terminal mobile à un moment de mesure actuel (i; 57), aux caractéristiques suivantes:

un moyen (44) configuré pour détecter l'orientation actuelle (o(i); 52), où le moyen (44) pour détecter l'orientation actuelle est réalisé selon le dispositif de la revendication 1 ; et un moyen (46) configuré pour mémoriser l'orientation actuelle détectée (o(i); 52) ensemble avec le paquet de mesure déterminé (MP(i)) dans une base de données de référence (14).

**17.** Dispositif selon la revendication 16, présentant par ailleurs un moyen configuré pour déterminer la position géographique actuelle (51) et dans lequel le moyen configuré pour mémoriser (46) est adapté pour mémoriser l'orientation actuelle détectée (o(i); 52) ensemble avec le paquet de mesure déterminé (MP(i)) et la position actuelle déterminée (51) comme paquet de référence (RP) dans la base de données de référence (14).

**18.** Dispositif selon l'une des revendications 16 à 17, dans lequel le moyen (44) pour détecter est adapté pour détecter l'orientation actuelle (o(i); 52) dans un système de coordonnées de référence, le système de coordonnées de référence présentant, comme origine de coordonnées, un point de référence d'un bâtiment.

**19.** Dispositif selon l'une des revendications 16 à 18, présentant, pour la détermination du paquet de mesure actuel (MP(i)), un aménagement d'antenne (32) avec une caractéristique de direction d'antenne (34) et dans lequel l'orientation du terminal mobile est définie par une orientation spatiale du lobe principal de la caractéristique d'orientation de l'antenne.

**20.** Dispositif selon l'une des revendications 16 à 19, dans lequel le moyen (46) pour mémoriser est adapté pour mémoriser l'orientation actuelle détectée (o(i); 52) dans un format numérique quantifié.

**21.** Procédé de mémorisation d'une orientation actuelle (o(i); 52) d'un terminal mobile à une position géographique actuelle (51), dans lequel est déterminé à la position géographique actuelle (51) un paquet de mesure actuel (MP(i)) qui présente une identification d'émetteur (54) et une propriété de signal électromagnétique (55) d'au moins un émetteur radio qui est reçu à la position géographique actuelle avec l'orientation actuelle (o(i); 52) du terminal mobile à un moment de mesure actuel (i; 57), aux caractéristiques suivantes:

détecter l'orientation actuelle (o(i); 52), où la détection de l'orientation actuelle est effectuée selon le procédé de la revendication 14; et

mémoriser l'orientation actuelle détectée (o(i); 52) ensemble avec le paquet de mesure déterminé (MP(i)) dans une base de données de référence (14).

22. Programme d'ordinateur avec des instructions pour réaliser toutes les étapes du procédé selon la revendication 21 lorsque le programme d'ordinateur est exécuté sur un ordinateur ou un microcontrôleur.

**FIGUR 1**

**FIGUR 2**

FIGUR 3A

FIGUR 3B

40

42     MP(i)     44

MP(i)     RP o(i)

46

14

# FIGUR 4

| RID | MAC | RSSI | PGS | Orientation | X | Y | Z | CREATED |
|-----|-----|------|-----|-------------|---|---|---|---------|
|     |     |      |     |             |   |   |   |         |

**FIGUR 5**

FIGUR 6

**FIGUR 7**

Flussdiagramm:

- Start
- 71: Empfange Messpaket MP(i); $K = 1$; $acc_{th} = 10dB$
- 72: Bestimme Übereinstimmungsmaß $acc_k$ zu Referenzpaket $RP_k$
- 73: $acc_K \leq acc_{th}$? — nein / ja
- 76: $acc_K \leq acc_{max}$? — nein / ja
- 77: ordne $RP_k$ der Menge passender RP-Kandidaten zu
- 78: $acc_k < acc_0$? — nein / ja
- 79: $acc_k = acc_0$
- 74: $K = K$? — nein / (ja)
- 75: $K = K + 1$
- 80: Oreintierungsschätzung basierend auf ausgewählten RP's
- Ende

FIGUR 8

Rechenbeispiel

sortierte Matching-Ergebnisse:

| $Acc_1$ | $Acc_2$ | $Acc_3$ | $Acc_4$ | $Acc_5$ | $Acc_6$ | $Acc_7$ |
|---|---|---|---|---|---|---|
| 5 | 5.2 | 5.7 | 6.1 | 8 | 9 | 9.5 |

$LIMIT = 1.2 (5 * 1.2 = 6)$

gewichtete Mittelung:

| $w_1 = 1.0$ | $w_2 = 0.69$ | $w_3 = 0.34$ |
|---|---|---|
| $o_1 = j$ | $o_2 = -1$ | $o_3 = j$ |

FIGUR 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1542492 A1